# EUROPEAN PATENT APPLICATION

(11) **EP 4 074 743 A1**
(43) Date of publication of application: **19.10.2022**
(21) Application number: 20899740.3
(22) Date of filing: 10.12.2020
(51) Int. Cl.: C08G 18/00, C08G 18/08, C08G 18/30, C08G 18/32, B24B 37/24, B01J 13/16

(54) **IONIC-GROUP-CONTAINING MICROBALLOON AND PRODUCTION METHOD THEREFOR**

(30) Priority: 11.12.2019 JP 2019223618
(71) Applicant: Tokuyama Corporation, Shunan-shi, Yamaguchi 745-8648 (JP)
(72) Inventor: SHIMIZU, Yasutomo, Shunan-shi, Yamaguchi 745-8648 (JP); KAWASAKI, Takayoshi, Shunan-shi, Yamaguchi 745-8648 (JP)
(74) Representative: Gerauer, Marc Philippé
(86) International application number: PCT/JP2020/046169
(87) International publication number: WO 2021/117837

(57) **Abstract**

The present invention relates to a microballoon. The microballoon is made of polyurethane (urea). The microballoon is characterized in that an inner surface of the microballoon contains ionic groups. According to the present invention, through use for a CMP polishing pad, affinity with a slurry liquid for polishing is improved, and thus it is possible to provide a microballoon by which good polishing characteristics may be exhibited without lowering the resin strength of a polishing pad.

## Description

### Technical Field

The present invention relates to a microballoon made of polyurethane (urea) that contains ionic groups inside.

### Background Art

A microballoon, which is a microballoon containing therein a skin care ingredient, a fragrance ingredient, a dye ingredient, an analgesic ingredient, a deodorant ingredient, an antioxidant ingredient, a bactericidal ingredient, or a heat storage ingredient, or a hollow microballoon whose inside is hollow, has conventionally been used for many fields such as pesticides, pharmaceuticals, fragrances, liquid crystals, adhesives, electronic material parts, and building materials.

In particular, in recent years, a hollow microballoon has been examined for the purpose of providing a pore in a polishing pad for chemical mechanical polishing (CMP) (hereinafter, also referred to as a polishing pad), which is made of polyurethane (urea) and is used for wafer polishing.

As the hollow microballoon used for the CMP polishing pad, a microballoon such as vinylidene chloride resin, whose surface is sprinkled with inorganic particles in order to improve dispersibility in polyurethane (urea), has been known in the related art, but there is a possibility that the inorganic particles may become a factor of defect on a wafer.

Thus, the present inventors, etc. have suggested a polishing pad having excellent polishing characteristics, in which a hollow microballoon formed of a highly elastic polyurethaneurea resin film having a good compatibility with a urethane resin is dispersed in the urethane resin for the polishing pad (see PTL 1).

Meanwhile, for the purpose of improving polishing characteristics, a CMP polishing pad having an ionic group has been examined.

For example, PTL 2 suggests a polishing pad provided with a groove, in which the groove is coated with an ionic-group-containing resin for the purpose of improving abnormal retention of slurry or polishing chips within a polishing surface groove during polishing.

PTL 3 suggests a polishing pad having abrasive grains dispersed in a resin, in which an ionic group is contained in the resin for the purpose of improving the polishing rate or reducing scratches.

### Citation List

### Patent Literature

[PTL 1] WO 2019/198675
[PTL 2] JP 2006-159380 A
[PTL 3] JP 2008-213140 A
[PTL 4] JP 2019-034283 A

### Summary of Invention

### Technical Problem

However, in the method described in PTL 2, although it was possible to achieve long-term polishing, no significant improvement was observed in the polishing characteristics because only the inside of the groove was coated with the ionic group. Further, in the supply of slurry as well, in the further fine polishing that has been required in recent years, in order to ensure the uniformity of a wafer, it has been required to uniformly supply slurry over the entire CMP polishing pad.

In PTL 3, it was possible to exhibit excellent polishing characteristics by the polishing pad using the ionic group-introduced resin. However, due to the introduction of the ionic group into the resin that is a base of the polishing pad, the physical properties of the resin have to be sacrificed, and thus improvement is further required.

Therefore, the present inventors, etc. have focused on a microballoon as a method of introducing an ionic group. PTL 4 suggests a microballoon formed of an anionic-group-containing polyurethaneurea resin film, as a novel microballoon. However, the ionic group is introduced to the outer surface of the microballoon for use as a toner. As a result, even if the microballoon is applied to use for CMP, it was difficult to introduce sufficient ionic groups to the surface of the CMP polishing pad.

Therefore, an object of the present invention is to provide a material capable of improving polishing characteristics without lowering the resin strength of a polishing pad.

### Solution to Problem

The present inventors, etc. have conducted intensive studies in order to solve the above problems, and as a result, have found that the above problems are solved by using a microballoon made of polyurethane, polythiourethane, polyurea, polyurethaneurea or polythiourethaneurea (in the present invention, these are also collectively referred to as polyurethane (urea)), i.e., a microballoon characterized in that an inner surface of the microballoon contains ionic groups. Then, the present invention has been completed.

That is, the present invention relates to a microballoon made of polyurethane (urea), i.e., a microballoon characterized in that an inner surface of the microballoon contains ionic groups (in the present invention, also referred to as an ionic-group-containing microballoon).

Further, the present invention also provides a polishing pad including the microballoon, and a method of producing the microballoon.

That is, the present invention is to provide the followings [1] to [7].
[1] A microballoon made of polyurethane (urea) and having ionic groups on an inner surface of the microballoon.
[2] The microballoon described in [1], in which an average particle size is 1 µm to 500 µm.
[3] The microballoon described in [1] or [2], in which an amount of the ionic groups contained in the microballoons is 0.05 mmol/g to 5 mmol/g.
[4] A CMP polishing pad including the microballoon described in any one of [1] to [3].
[5] The CMP polishing pad described in [4], in which a hysteresis loss in a tensile test is 50% or less.
[6] A method of producing a microballoon, the method including:
   (1) mixing and stirring (a) a surfactant-containing organic solvent solution with (b) an aqueous solution containing an ionic-group-containing compound (X) that contains an active hydrogen group capable of reacting with an isocyanate group and at least one ionic group to prepare a water-in-oil (W/O) emulsion that includes the organic solvent solution as a continuous phase, and the aqueous solution as a disperse phase; and
   (2) adding (c) a polyfunctional isocyanate compound having at least two isocyanate groups to the water-in-oil (W/O) emulsion to react the polyfunctional isocyanate compound and the ionic-group-containing compound (X) on an interface of the water-in-oil (W/O) emulsion, thereby forming the microballoon made of polyurethane (urea).
[7] The production method of the microballoon described in [6], in which (b) the aqueous solution containing the ionic-group-containing compound that contains an active hydrogen group capable of reacting with an isocyanate group and at least one ionic group further contains (d) an active hydrogen group-containing compound which contains no ionic group and is selected from polyol, polyamine, or a compound having both a hydroxy group and an amino group.

In the present invention, the term "W/O emulsion" or "water-in-oil (W/O) emulsion" means an emulsion containing a continuous oil phase (a continuous phase) and an aqueous phase (a disperse phase) in the form of droplets dispersed in the oil phase, i.e., a macroscopically homogeneous composition.

### Advantageous Effects of Invention

The ionic-group-containing microballoon of the present invention is characterized in that the inner surface contain ionic groups. Further, by using such ionic-group-containing microballoon for a CMP polishing pad, the affinity with a polishing slurry liquid is improved, and then good polishing characteristics may be exhibited without lowering the strength of the resin of the polishing pad.

The action is not clear, but is inferred as follows.

In general, the purpose of using a microballoon for a CMP polishing pad is to form a pore on the surface of the CMP polishing pad. That is, in fabrication as the CMP polishing pad, cutting to a predetermined size is carried out or the surface is shaved so as to expose a new polishing surface, so that the microballoon within the CMP polishing pad is cut and polished, and the inner surface of the microballoon is exposed, and the portion becomes a pore. The role of the pore is to retain slurry, and thus the affinity with the slurry becomes important.

In the ionic-group-containing microballoon of the present invention, it is thought that since the inner surface of the microballoon contains the ionic groups, the surface of the pore of the CMP polishing pad has the ionic groups, so that the affinity between the surface of the pore and the slurry containing water as a main component is improved, and the effect of the present invention is exhibited.

Since a water-soluble compound may be contained inside the ionic-group-containing microballoon of the present invention, the microballoon may be a functional microballoon containing therein a skin care ingredient, a fragrance ingredient, a dye ingredient, an analgesic ingredient, a deodorant ingredient, an antioxidant ingredient, a bactericidal ingredient, or a heat storage ingredient, or a hollow microballoon whose inside is hollow, and thus may be not only used for the CMP polishing pad but also used in many fields such as pesticides, pharmaceuticals, fragrances, liquid crystals, adhesives, electronic material parts, and building materials.

### Description of Embodiments

The ionic-group-containing microballoon of the present invention is a microballoon characterized in that the inner surface of the microballoon contains ionic groups, and the ionic groups contained in the inner surface may be measured by the following method.

First, the ionic-group-containing microballoon of the present invention is added to a curable composition, and then the curable composition is cured to form a resin so that the ionic-group-containing microballoon is embedded in the resin. Next, the resin in which the ionic-group-containing microballoon is embedded is sliced so that the inner surface of the ionic-group-containing microballoon is exposed. Through this operation, it becomes possible to measure the ionic groups present on the inner surface of the ionic-group-containing microballoon. The measurement method is not particularly limited as long as through the method, ionic groups may be measured. Examples thereof include microinfrared spectroscopy. When the microinfrared spectroscopy is used, it is possible to measure whether a characteristic peak of ionic groups is present on the inner surface of the microballoon. The curable composition is not particularly limited as long as the composition may be cured to form a resin, but examples thereof include a composition capable of forming polyurethane (urea).

Further, the amount of ionic groups contained in the ionic-group-containing microballoon is preferably 0.05 mmol/g to 5 mmol/g, more preferably 0.1 mmol/g to 5 mmol/g, further preferably 0.5 mmol/g to 4 mmol/g, further preferably 1.0 mmol/g to 4 mmol/g. Within this range, it is easy to fabricate a polyurethane (urea) resin film, and a good microballoon may be obtained, and thus it is possible to exhibit excellent polishing characteristics. The amount of ionic groups contained in the microballoon means an amount of ionic groups contained in the resin film of the microballoon (the outer shell of the microballoon). The amount of the ionic groups is an amount of used ionic groups relative to the total amount of monomers used for the resin film.

The amount of ionic groups contained in the ionic-group-containing microballoon may be adjusted by the blending amount of an ionic-group-containing compound that contains at least one ionic group as described below.

The ionic group refers to a group having a portion that becomes a cation, or an anion. Specifically, it is desirable that the ionic group is a group capable of forming at least one type of ion selected from the group including a carboxylic acid group, a sulfonic acid group, a phosphoric acid group, a phosphonic acid group, and a quaternary ammonium group, or salts of these groups. Further, it is desirable that the ionic group is a group capable of forming at least one type of ion selected from the group including a carboxylic acid group, a sulfonic acid group, and a quaternary ammonium cation, or salts of these groups.

The average particle size of the ionic-group-containing microballoons of the present invention is not particularly limited, but is preferably 1 µm to 500 µm, more preferably 5 µm to 200 µm, most preferably 10 to 100 µm. In measuring the average particle size of the microballoons, a conventionally known method may be employed, and specifically an image analysis method can be used. The particle size can be easily measured by using the image analysis method. Also, the average particle size is an average particle size of primary particles. The measurement of the average particle size through the image analysis method can be carried out by using, for example, a scanning electron microscope (SEM).

Also, the ionic-group-containing microballoon of the present invention is usually in a state where water (or an aqueous solution) is present inside, but water on the inside may be completely removed by a drying step so as to obtain a hollow microballoon. The bulk density in the case of the hollow microballoon is not particularly limited, but is preferably 0.01 g/cm³ to 0.5 g/cm³, more preferably 0.02 g/cm³ to 0.3 g/cm³.

The microballoon in the present invention is a hollow particle whose outer shell is made of polyurethane (urea), and water (or an aqueous solution) may be present in the hollow portion. That is, the ionic-group-containing microballoon of the present invention is formed of at least one type of resin selected from polyurethane, polythiourethane, polyurea, polyurethaneurea and polythiourethaneurea, and is preferably formed of polyurethane or polyurethaneurea among them.

The ionic-group-containing microballoon of the present invention is used for a CMP polishing pad so that the CMP polishing pad containing the microballoon is obtained. Thus, as described above, it becomes possible to manufacture a CMP polishing pad having ionic groups in a pore. The material for the CMP polishing pad is not particularly limited but a urethane resin is usually used.

As a method of manufacturing such a CMP polishing pad, a conventionally known method may be employed without limitation. The urethane resin containing the ionic-group-containing microballoon of the present invention is cut and subjected to surface polishing so that the inner surface of the ionic-group-containing microballoon is exposed, and then the CMP polishing pad having a pore on the polishing surface of the urethane resin may be obtained.

The urethane resin containing the ionic-group-containing microballoon of the present invention may be produced by a conventionally known method without particular limitation. Examples thereof include a method in which an isocyanate group-containing compound, an active hydrogen group-containing compound which has an active hydrogen polymerizable with an isocyanate group, and the ionic-group-containing microballoon of the present invention is uniformly mixed and dispersed, and then is cured.

As the curing method, a conventionally known method may be employed without particular limitation, and specifically, a dry method such as a one pot method and a prepolymer method, and a wet method using a solvent may be used. Among them, the dry method is suitably employed in the present invention, and in particular, the dry method using the prepolymer method is suitably employed.

The blending amount of the ionic-group-containing microballoon of the present invention in the urethane resin is preferably 0.1 to 20 parts by mass, more preferably 0.2 to 10 parts by mass, further preferably 0.5 to 8 parts by mass relative to 100 parts by mass of the isocyanate group-containing compound, and the active hydrogen group-containing compound which has an active hydrogen polymerizable with an isocyanate group in total. Within this range of the ionic-group-containing microballoon of the present invention, it is possible to exhibit excellent polishing characteristics.

Further, in the present invention, as the active hydrogen group-containing compound which has an active hydrogen polymerizable with an isocyanate group, active hydrogen group-containing polyrotaxane which has an active hydrogen polymerizable with an isocyanate group is suitable in that the polishing characteristics are further improved. Polyrotaxane is a molecular complex having a structure where cyclic molecules cannot escape from an axial molecule due to steric hindrance, in which a chain-like axial molecule passes through the inside of rings of a plurality of cyclic molecules, and bulky groups are bonded to both ends of the axial molecule, and is also called a supramolecule.

Further, in the present invention, as for the active hydrogen group-containing compound which has an active hydrogen polymerizable with an isocyanate group, an amino group-containing compound having at least one amino group in the molecule, in which the total of groups having active hydrogens is two or more, is suitable in increasing the strength of the resin.

The CMP polishing pad including the microballoon of the present invention may have any suitable hardness. The hardness may be measured according to the Shore method, and may be measured in accordance with, for example, JIS standard (hardness test) K6253. The urethane resin of the present invention preferably has a shore hardness of 40A to 90D.

Further, the CMP polishing pad including the microballoon of the present invention preferably has a compressibility in a certain range in order to exhibit the flatness of a polishing target object. The compressibility may be measured by, for example, a method based on JIS L 1096. The compressibility of the urethane resin of the present invention is preferably 0.5% to 50%. Within the above-mentioned range, it becomes possible to exhibit excellent flatness of the polishing target object.

The CMP polishing pad including the microballoon of the present invention exhibits more excellent polishing characteristics if the hysteresis loss property is low. The hysteresis loss is a hysteresis loss obtained by a tensile test, and may be measured by, for example, a method based on JIS K 6251. Specifically, a test piece prepared in a dumbbell shape is elongated up to 100% and then is returned to its original state so as to measure the hysteresis loss ([area of elongation and stress at restoration to original state after elongation / area of elongation and stress at elongation]×100). The hysteresis loss of the CMP polishing pad including the microballoon of the present invention is preferably 70% or less, more preferably 50% or less, further preferably 40% or less, but is not particularly limited. When the hysteresis loss is low, in the case of the use as the polishing pad, it is presumed that the kinetic energy of abrasive grains may be uniformly used for polishing the polishing target object. Then, it is thought that an excellent flatness, and a high polishing rate may be exhibited. "Area of elongation and stress at restoration to original state after elongation" in the measurement of the hysteresis loss is represented by "area of stress strain curve at elongation - area of stress strain curve at contraction," and the "area of elongation and stress at elongation" means "area of stress strain curve at elongation."

In the present invention, the mode of the CMP polishing pad is not particularly limited, and for example, a groove structure may be formed on the surface thereof. The groove structure of the CMP polishing pad preferably has a shape that allows the slurry to be retained and refreshed, and specific examples thereof include an X (stripe) groove, an XY lattice groove, a concentric groove, a through hole, a non-through hole, a polygonal column, a cylinder, a spiral groove, an eccentric groove, a radial groove, and a combination of these grooves.

Further, a method of producing the groove structure of the CMP polishing pad is not particularly limited. Examples thereof include a machine-cutting method using a jig like a bite having a predetermined size, a production method in which a resin is poured into a mold having a predetermined surface shape and is cured, a production method in which a resin is pressed by a press plate having a predetermined surface shape, a production method using photolithography, a production method using a printing method, and a production method using laser light employing carbon dioxide gas laser or the like.

The method of producing the ionic-group-containing microballoon of the present invention is not particularly limited as long as the method may produce a microballoon having characteristics of the present invention, but a production using the following method is preferred.

A suitable production method of the ionic-group-containing microballoon of the present invention is a production method including
(1) mixing and stirring (a) a surfactant-containing organic solvent solution with (b) an aqueous solution containing an ionic-group-containing compound (X) that contains an active hydrogen group capable of reacting with an isocyanate group and at least one ionic group to prepare a water-in-oil (W/O) emulsion that includes the organic solvent solution as a continuous phase, and the aqueous solution as a disperse phase, and
(2) adding (c) a polyfunctional isocyanate compound having at least two isocyanate groups to the water-in-oil (W/O) emulsion to react the polyfunctional isocyanate compound and the ionic-group-containing compound (X) on the interface of the water-in-oil (W/O) emulsion, thereby forming the microballoon made of polyurethane (urea).

The production method is subdivided and is sorted into
a first step: preparing (a) a surfactant-containing organic solvent solution (hereinafter, also referred to as a component (a)), a second step: preparing (b) an aqueous solution containing an ionic-group-containing compound (X) that contains an active hydrogen group capable of reacting with an isocyanate group and at least one ionic group (hereinafter, also referred to as a component (b)), a third step: mixing and stirring the component (a) and the component (b) to prepare a W/O emulsion that includes the organic solvent solution as a continuous phase, and the aqueous solution as a disperse phase, a fourth step: adding (c) a polyfunctional isocyanate compound having at least two isocyanate groups (hereinafter, also referred to as a component (c)) to the W/O emulsion, and reacting the polyfunctional isocyanate compound with the ionic-group-containing compound (X) on the interface of the W/O emulsion, thereby forming a microballoon made of polyurethane (urea), so that a microballoon dispersion liquid in which the formed microballoon is dispersed is obtained, and a fifth step: separating ionic-group-containing microballoon from the microballoon dispersion liquid to acquire the ionic-group-containing microballoon. In the present invention, the obtained microballoon may also be used in a state where an aqueous solution is contained inside the microballoon, or as a hollow microballoon from which the aqueous solution is removed depending on applications. The above-described first step and the second step may also be in the reverse order in the production.

Hereinafter, the production method of the ionic-group-containing microballoon of the present invention will be described.

### (Production method of ionic-group-containing microballoon made of polyurethane (urea))

### First step:

The first step is a step of preparing (a) a surfactant-containing organic solvent solution that becomes a continuous phase in a W/O emulsion.

This step is a step of dissolving a surfactant to be described below in an organic solvent to be described below to obtain the organic solvent solution. A uniform solution may be obtained through dissolution using a conventionally known method.

The use amount of the surfactant in the present invention is usually 0.01 to 20 parts by mass, preferably 0.1 to 10 parts by mass relative to 100 parts by mass of the organic solvent. Within this range, aggregation of droplets of a disperse phase in the W/O emulsion is avoided, and it is easy to obtain a microballoon with a complete average particle size.

Further, a urethanization catalyst to be described below may be added to the component (a) for the purpose of promoting a reaction between an isocyanate compound to be described below, and an ionic-group-containing compound that contains an active hydrogen group capable of reacting with an isocyanate group and at least one ionic group.

### Second step:

The second step is a step of adjusting (b) an aqueous solution which becomes the disperse phase in the W/O emulsion and contains the ionic-group-containing compound that contains an active hydrogen group capable of reacting with an isocyanate group and at least one ionic group.

This step is a step in which the ionic-group-containing compound to be described below, which contains an active hydrogen group capable of reacting with an isocyanate group and at least one ionic group, is dissolved in water to obtain the aqueous solution. A uniform solution may be obtained through dissolution using a conventionally known method.

In the present invention, the use amount of the ionic-group-containing compound (X) that contains an active hydrogen group capable of reacting with an isocyanate group and at least one ionic group is usually 0.1 to 50 parts by mass, preferably 0.2 to 20 parts by mass, more preferably 0.5 to 30 parts by mass relative to 100 parts by mass of water. Within this range, it is easy to produce a polyurethane (urea) resin film by producing the W/O emulsion, so that a good microballoon may be obtained.

Further, the component (b) used in the present invention may contain (d) an active hydrogen group-containing compound to be described below, which contains no ionic group and is selected from polyol, polyamine, or a compound having both a hydroxy group and an amino group (hereinafter, also referred to as a component (d)). When the component (d) is contained, the total amount of the ionic-group-containing compound that contains an active hydrogen group capable of reacting with an isocyanate group and at least one ionic group, and the component (d) is usually 0.5 to 50 parts by mass, preferably 1 to 40 parts by mass, more preferably 2 to 30 parts by mass relative to 100 parts by mass of water. Within this range, it is easy to produce a polyurethane (urea) resin film by producing the W/O emulsion, so that a good microballoon may be obtained. Further, regarding a suitable ratio of the ionic-group-containing compound (X) and the component (d) in the present invention, when the total of the ionic-group-containing compound (X) and the component (d) is 100 parts by mass, it is desirable that the ionic-group-containing compound (X) ranges from 5 to 90 parts by mass, and the component (d) ranges from 10 to 95 parts by mass, and it is more desirable that the ionic-group-containing compound (X) ranges from 20 to 80 parts by mass, and the component (d) ranges from 20 to 80 parts by mass. Within this range, excellent polishing characteristics may be exhibited.

In the ionic-group-containing compound (X) that contains an active hydrogen group capable of reacting with an isocyanate group and at least one ionic group, when the compound contains one active hydrogen group capable of reacting with an isocyanate group, the component (d) becomes an essential component.

Further, the component (b) used in the present invention may contain a water-soluble compound for the purpose of imparting functionality to a microballoon. In this case, the addition amount of the added water-soluble compound usually ranges from 1 to 50 parts by mass relative to 100 parts by mass of the component (b). In this case, a microballoon containing the contained water-soluble compound therein may be obtained.

Further, an urethanization catalyst to be described below may be added to the component (b) for the purpose of promoting a reaction between an isocyanate compound to be described below, and the ionic-group-containing compound that contains an active hydrogen group capable of reacting with an isocyanate group and at least one ionic group.

### Third step:

The third step is a step of mixing and stirring the component (a) obtained in the first step and the component (b) obtained in the second step to prepare the W/O emulsion which includes the component (a) as a continuous phase, and the component (b) as a disperse phase.

In the present invention, in the method of obtaining the W/O emulsion by mixing and stirring the component (a) and the component (b), adjustment may be made by appropriate mixing and stirring through a conventionally known method in consideration of the particle size of microcapsules to be produced. The particle size of the W/O emulsion substantially corresponds to the size of the particle size of the obtained microcapsules.

Among them, suitably employed is a method in which the component (a) and the component (b) are mixed and then are formed into the W/O emulsion by a dispersion method using a conventionally known disperser such as a high-speed shear type, a friction type, a high-pressure jet type, and an ultrasonic type in stirring. Among them, the high-speed shear type is preferred. When the high-speed shear type disperser is used, the rotation speed is preferably 1,000 to 20,000 rpm, more preferably 1,500 to 10,000 rpm. The dispersion time is preferably 0.1 to 60 min, preferably 0.5 to 30 min. The dispersion temperature is preferably 10 to 40°C.

Further, in the present invention, regarding the weight ratio of the component (a) to the component (b), when the component (a) is 100 parts by mass, the component (b) is preferably 1 to 100 parts by mass, more preferably 5 to 90 parts by mass, most preferably 10 to 80 parts by mass. Within this range, a good emulsion is obtained.

### Fourth step:

The fourth step is a step of adding (c) a polyfunctional isocyanate compound having at least two isocyanate groups to the W/O emulsion, and reacting the polyfunctional isocyanate compound with the ionic-group-containing compound (X) on the interface of the W/O emulsion, thereby forming a microballoon formed of the polyurethane (urea) resin film, so that a microballoon dispersion liquid in which the formed microballoon is dispersed is obtained.

In the present invention, the use amount of the component (c), i.e., the polyfunctional isocyanate compound having at least two isocyanate groups, is preferably 10 to 5000 parts by mass, more preferably 50 to 1000 parts by mass, most preferably 100 to 600 parts by mass relative to 100 parts by mass of the ionic-group-containing compound (X) that contains an active hydrogen group capable of reacting with an isocyanate group and at least one ionic group. Within this range, an excellent resin film may be formed.

Further, in the case where the component (b) contains the component (d), the use amount of the component (c) is preferably 10 to 4000 parts by mass, more preferably 20 to 2000 parts by mass, most preferably 40 to 500 parts by mass, relative to 100 parts by mass of the total amount of the ionic-group-containing compound (X) that contains an active hydrogen group capable of reacting with an isocyanate group and at least one ionic group and the component (d). Within this range, an excellent resin film may be formed.

Further, the component (c) may be used as it is, and may be used by being dissolved in the organic solvent. When the organic solvent is used, the same organic solvent as that used for the component (a) is suitable.

When the organic solvent is used, it is suitable to use the organic solvent in a range of 50 to 1000 parts by mass relative to 100 parts by mass of the component (c).

Regarding the number of moles of active hydrogen groups, i.e., the sum of the number of moles of active hydrogen groups contained in the ionic-group-containing compound (X) used in the present invention and the number of moles of active hydrogen groups contained in the component (d) in the case where the component (d) is contained, when the isocyanate groups of the component (c) are 1 mol, the total number of moles of active hydrogen groups is preferably 0.8 to 1.2 mol. Through production within this range, all of the used ionic-group-containing compound (X), the component (d), and the component (c) are easily used in the resin film. More preferably, when the isocyanate groups are 1 mol, the total number of moles of active hydrogen groups is more preferably 0.85 to 1.15 mol, further preferably 0.9 to 1.1 mol.

The reaction temperature is not particularly limited as long as at the temperature, the W/O emulsion does not break, and it is desirable to perform reaction preferably in a range of 5 to 70°C. The reaction time is also not particularly limited as long as the W/O emulsion may be formed, and is usually selected in a range of 1 to 480 min.

### Fifth step:

The fifth step is a step of separating and acquiring an ionic-group-containing microballoon from the microballoon dispersion liquid.

In the fifth step, if possible, the separation method of separating the ionic-group-containing microballoon from the microballoon dispersion liquid may be selected from general separation methods without particular limitation, and specifically, filtering, centrifugation, or the like is used.

Further, for the purpose of improving the dispersibility of the ionic-group-containing microballoon, the ionic-group-containing microballoon may be treated with a solution containing (e) a monofunctional active hydrogen compound containing only one active hydrogen group selected from an amino group and a hydroxy group (hereinafter, also referred to as a component (e)). In this case, the following two may be exemplified.
(1) A method in which once the ionic-group-containing microballoon is separated from the microballoon dispersion liquid obtained in the fourth step, the separated ionic-group-containing microballoon is dispersed in the solution containing the component (e), and then the ionic-group-containing microballoon is re-separated.
(2) A method in which the microballoon dispersion liquid and the solution containing the component (e) are mixed, and then the ionic-group-containing microballoon is separated from the microballoon dispersion liquid.

In the present invention, the use amount of the component (e) may be adjusted according to the amount of the component (c), and is preferably 0.1 to 20 parts by mass relative to 1 part by mass of the component (c), more preferably 0.2 to 15 parts by mass, most preferably 0.5 to 10 parts by mass. Within this range, the dispersion of the ionic-group-containing microballoon becomes good.

The component (e) used in the present invention has the purpose of improving the dispersibility by deactivating the activity of the isocyanate groups present on the surface of the resin film. It is thought that as compared to the mass ratio of the resin film prior to addition of the component (e), the amount of the component (e) reacted with the isocyanate groups on the resin film surface is very small. Thus, in the present invention, in the calculation of the amount of ionic groups contained in the ionic-group-containing microballoon, the component (e) shall not be included in the total amount of monomers used for the resin film.

Further, an urethanization catalyst to be described below may be added to the solution containing the component (e) for the purpose of promoting a reaction between the isocyanate groups and the component (e).

In the methods (1) and (2), if possible, the separation method of separating the ionic-group-containing microballoon from the microballoon dispersion liquid may be selected from general separation methods without particular limitation, and specifically, filtering, centrifugation or the like is used.

Hereinafter, each component used in the present invention will be described.

### <Surfactant>

In the present invention, as for the surfactant used for the component (a), a conventionally known surfactant may be used without any limitation as long as it is dissolved in the organic solvent to be described below. Meanwhile, in the present invention, higher fatty acids may also be used as the organic solvent.

Suitable examples of the surfactant of the present invention include nonionic surfactants. As for the surfactant, two or more types of surfactants may be used in combination.

### (Nonionic Surfactant)

Examples of the nonionic surfactant include alkylene oxide-added nonionic surfactants and polyhydric alcohol-type nonionic surfactants.

The alkylene oxide-added nonionic surfactant is obtained by: directly adding alkylene oxide to higher alcohol, higher fatty acid, alkylamine or the like; reacting higher fatty acid or the like with polyalkylene glycols obtained by adding alkylene oxide to glycols; adding alkylene oxide to an esterified product obtained by reacting polyhydric alcohol with higher fatty acid; or adding alkylene oxide to higher fatty acid amide.

Examples of the alkylene oxide include ethylene oxide, propylene oxide and butylene oxide.

Specific examples of the alkylene oxide-added nonionic surfactant include oxyalkylene alkyl ether (e.g., octylalcoholethylene oxide adduct, laurylalcoholethylene oxide adduct, stearylalcoholethylene oxide adduct, oleylalcoholethylene oxide adduct, and laurylalcoholethylene oxide propylene oxide block adduct), polyoxy alkylene higher fatty acid ester (e.g., stearic acid ethylene oxide adduct, and lauric acid ethylene oxide adduct), polyoxy alkylene polyhydric alcohol higher fatty acid ester (e.g., lauric acid diester of polyethylene glycol, oleic acid diester of polyethylene glycol, and stearic acid diester of polyethylene glycol), polyoxyalkylene alkyl phenyl ether (e.g., nonylphenol ethylene oxide adduct, nonylphenol ethylene oxide propylene oxide block adduct, octylphenol ethylene oxide adduct, bisphenol A ethylene oxide adduct, dinonylphenol ethylene oxide adduct, and styrenated phenol ethylene oxide adduct), polyoxyalkylene alkyl amino ether (e.g., laurylamine ethylene oxide adduct, and stearylamine ethylene oxide adduct), and polyoxyalkylene alkyl alkanol amide (e.g., ethylene oxide adduct of hydroxyethyl lauric acid amide, ethylene oxide adduct of hydroxypropyl oleic acid amide, and ethylene oxide adduct of dihydroxyethyl lauric acid amide).

Examples of the polyhydric alcohol-type nonionic surfactant include polyhydric alcohol fatty acid ester, polyhydric alcohol fatty acid ester alkylene oxide adduct, polyhydric alcohol alkyl ether, and polyhydric alcohol alkylether alkylene oxide adduct.

Specific examples of the polyhydric alcohol fatty acid ester include pentaerythritol monolaurate, pentaerythritol monooleate, sorbitan monolaurate, sorbitan monostearate, sorbitan monolaurate, sorbitan dilaurate, sorbitan dioleate, and sucrose monostearate.

Specific examples of the polyhydric alcohol fatty acid ester alkylene oxide adduct include ethylene glycol monooleate ethylene oxide adduct, ethyleneglycol monostearate ethylene oxide adduct, trimethylolpropane monostearate ethylene oxide propylene oxide random adduct, sorbitan monolaurate ethylene oxide adduct, sorbitan monostearate ethylene oxide adduct, sorbitan distearate ethylene oxide adduct, and sorbitan dilaurate ethylene oxide propylene oxide random adduct.

Specific examples of the polyhydric alcohol alkyl ether include pentaerythritol monobutyl ether, pentaerythritol monolauryl ether, sorbitan monomethyl ether, sorbitan monostearyl ether, methyl glycoside, and lauryl glycoside.

Specific examples of the polyhydric alcohol alkylether alkylene oxide adduct include sorbitan monostearyletherethylene oxide adduct, methyl glycoside ethylene oxide propylene oxide random adduct, lauryl glycoside ethylene oxide adduct, and stearyl glycoside ethylene oxide propylene oxide random adduct.

Among them, the surfactant used in the present invention is preferably selected from polyhydric alcohol fatty acid esters, and is more preferably cyclic sorbitol.

Among those described above, it is desirable that the most preferable surfactant has an HLB value of 6 or less. Further, specific examples thereof include sorbitan monostearate (product name: span (registered trademark) 60), sorbitan monooleate (product name: span (registered trademark) 80), and sorbitan trioleate (product name: span (registered trademark) 85).

### <Organic Solvent>

In the present invention, as for the organic solvent used for the component (a), a conventionally known organic solvent incompatible with water may be used without any limitation.

As for the organic solvent, those generally known as a hydrophobic solvent, hydrocarbon oils, and ester or ether oils may be used. The hydrophobic solvent used in the present invention preferably has a solubility of 1 g/1 L or less in water of 25°C.

Examples of the hydrophobic solvent include aliphatic solvents such as C6 to C12 hydrocarbons, particularly n-hexane, n-heptane, n-octane, and cyclohexane, and include aromatic solvents such as benzene, toluene, and xylene. A halogenated solvent is usually chloride, and examples thereof may include chloroform, dichloromethane, tetrachloromethane, and mono or dichlorobenzene.

As for other hydrophobic solvents, hydrocarbon oils, ester oils, ether oils, higher fatty acids, or animal and vegetable oils may be exemplified. Examples thereof include: hydrocarbon oils such as liquid paraffin, liquid isoparaffin, hydrogenated polyisobutene, squalene, and n-hexadecane; ester oils such as diisostearyl malate, octyldodecyl lactate, isotridecyl isononanoate, octyldodecyl myristate, isopropyl palmitate, isopropyl isostearate, butyl stearate, myristyl myristate, isopropyl myristate, octyldodecyl myristate, di-2-ethylhexyl adipate, sebacic acid diisopropyl, dicapric acid neopentylglycol, and tricaproin; ether oils such as dioctylether, ethyleneglycolmonolaurylether, ethyleneglycoldioctylether, and glycerolmonooleylether; higher fatty acids such as capric acid, lauric acid, myristic acid, palmitic acid, stearic acid, arachidic acid, behenic acid, oleic acid, linolenic acid, linoleic acid, and ricinoleic acid; and animal and vegetable oils such as camellia oil, soybean oil, corn oil, cottonseed oil, rapeseed oil, olive oil, palm oil, castor oil, and fish oil.

These solvents may be used alone, or as a mixed solvent of two or more types.

The organic solvent used in the present invention is preferably selected from hydrophobic solvents, and more preferably, n-hexane, n-heptane, n-octane, benzene, toluene, xylene, hydrocarbon oils, higher fatty acids, animal and vegetable oils and the like are preferred. In particular, it is desirable to select a hydrophobic solvent containing higher fatty acid, or animal and vegetable oil. By using these, it becomes easy to produce a stable emulsion.

### <Ionic-group-containing compound (X) that contains an active hydrogen group capable of reacting with an isocyanate group and at least one ionic group>

The ionic-group-containing compound (X) that contains an active hydrogen group capable of reacting with an isocyanate group and at least one ionic group, which is used in the component (b) of the present invention, may be used without limitation, as long as it is at least an ionic-group-containing compound that contains an active hydrogen group capable of reacting with an isocyanate group, i.e., at least one selected from a hydroxy group, an amino group or a thiol group, and at least one ionic group. In the present invention, the ionic group refers to a group having a portion that becomes a cation, or an anion. Specifically, a group capable of forming at least one type of ion selected from the group including a carboxylic acid group, a sulfonic acid group, a phosphoric acid group, a phosphonic acid group, and a quaternary ammonium group, or salts of these groups is desirable. An amino group may react with an isocyanate group, and thus is not preferable as an ionic group.

Hereinafter, examples of the ionic-group-containing compound (X) that contains an active hydrogen group capable of reacting with an isocyanate group and at least one ionic group include a compound that contains an active hydrogen group capable of reacting with an isocyanate group and a carboxylic acid group, a compound that contains an active hydrogen group capable of reacting with an isocyanate group and a sulfonic acid group, a compound that contains an active hydrogen group capable of reacting with an isocyanate group and a phosphoric acid group, a compound that contains an active hydrogen group capable of reacting with an isocyanate group and a phosphonic acid group, a compound that contains an active hydrogen group capable of reacting with an isocyanate group and a quaternary ammonium cation, and a compound that contains an active hydrogen group capable of reacting with an isocyanate group and two or more types of ionic groups. The active hydrogen group in these compounds is, for example, preferably at least one selected from a hydroxy group, an amino group and a thiol group as described above.

Hereinafter, specific examples of these will be described.

### (Compound that contains an active hydrogen group capable of reacting with an isocyanate group and a carboxylic acid group)

Examples thereof include 5-aminopentanoic acid, glyceric acid, glycolic acid, 3-hydroxybutyric acid, 2-hydroxybutyric acid, 3-hydroxypropionic acid, 2-hydroxy-2-methylbutyric acid, hydantoin acid, hydroxypivalic acid, β-hydroxyisovaleric acid, 3-hydroxyaspartic acid, 1-hydroxycyclopropanecarboxylic acid, 3-mercaptopropionic acid, isoserine, malic acid, tartaric acid, 2-aminocyclohexacarboxylic acid, 3-aminocyclohexacarboxylic acid, 4-aminocyclohexacarboxylic acid, 2-hydroxycyclohexacarboxylic acid, 3-hydroxycyclohexacarboxylic acid, 4-hydroxycyclohexacarboxylic acid, glycine, dimethylolacetic acid, dimethylolpropionic acid, dimethylolbutyric acid, lactic acid, or salts of the above-mentioned compounds.

### (Compound that contains an active hydrogen group capable of reacting with an isocyanate group, and a sulfonic acid group)

Examples thereof include 2-aminoethane sulfonic acid, 2-hydroxyethane sulfonic acid, 3-hydroxypropane sulfonic acid, 1,4-dihydroxy-1,4-sodium butanedisulfonate, taurine, N,N-bis(2-hydroxyethyl)-2-aminoethane sulfonic acid, ethylenediaminoethane sulfonic acid, ethylenediamino(sulfonic acid)butyrate, ethylenediamino-2-ethaneamidebutyl sulfonic acid, or salts of the above-mentioned compounds.

### (Compound that contains an active hydrogen group capable of reacting with an isocyanate group, and a phosphoric acid group)

Examples thereof include adenosine monophosphate, adenosine diphosphate, adenosine triphosphate, deoxyadenosine monophosphate, deoxyadenosine diphosphate, deoxyadenosine triphosphate, guanosine monophosphate, guanosine diphosphate, guanosine triphosphate, dioxyguanosine monophosphate, dioxyguanosine diphosphate, dioxyguanosine triphosphate, 5-methyluridine monophosphate, 5-methyluridine diphosphate, 5-methyluridine triphosphate, thymidine monophosphate, thymidine diphosphate, thymidine triphosphate, cytidinemonophosphate, cytidinediphosphate, cytidinetriphosphate, dioxycytidinemonophosphate, dioxycytidinediphosphate, dioxycytidinetriphosphate, uridinemonophosphate, uridinediphosphate, uridinetriphosphate, dioxyuridinemonophosphate, dioxyuridinediphosphate, dioxyuridinetriphosphate, α-glycerophosphate, β-glycerophosphate, β-D-glucopyranose1-phosphate, phosphorylethanolamine, phosphoserine, or salts of the above-mentioned compounds.

### (Compound that contains an active hydrogen group capable of reacting with an isocyanate group, and a phosphonic acid group)

Examples thereof include (2-hydroxy ethyl)phosphonic acid dimethyl, etidronic acid, (hydroxymethyl)phosphonic acid diethyl, alendronic acid, pamidronic acid, (aminomethyl)phosphonic acid, (1-aminoethyl)phosphonic acid, or salts of the above-mentioned compounds.

### (Compound that contains an active hydrogen group capable of reacting with an isocyanate group, and a quaternary ammonium cation)

Examples thereof include (2-hydroxyethyl)trimethylammoniumchloride, (2-hydroxyethyl)trimethylammoniumbromide, (2-hydroxyethyl)trimethylammoniumiodide, (2-hydroxyethyl)trimethylammoniumhydroxide, tris(2 - hydroxyethyl)methylammoniumhydroxide, bis(2-hydroxyethyl)dimethylammoniumchloride, (2-hydroxyethyl)triethylammoniumiodide, 2-hydroxypropyltrimethylammoniumchloride, 2-hydroxypropyltrimethylammoniumiodide, 3-chloro-2-hydroxypropyltrimethylammoniumchloride, 3-chloro-2-hydroxypropyltriethylammoniumchloride, 3-chloro-2-hydroxypropyltripropylammoniumchloride, 3-chloro-2-hydroxypropyldimethyllaurylammoniumchloride, 3-chloro-2-hydroxypropyldiethyllaurylammoniumchloride, 3-chloro-2-hydroxypropylethylmethyllaurylammoniumchloride, 3-bromo-2-hydroxypropyltrimethylammoniumbromide, 3-bromo-2-hydroxypropyltriethylammoniumbromide, 3-bromo-2-hydroxypropyltripropylammoniumbromide, 3-bromo-2-hydroxypropyldimethyllaurylammoniumbromide, 3-bromo-2-hydroxypropyldiethyllaurylammoniumbromide, or 3-bromo-2-hydroxypropylethylmethyllaurylammoniumbromide, 3-iodo-2-hydroxypropyltrimethylammoniumiodide, 3-iodo-2-hydroxypropyltriethylammoniumiodide, 3-iodo-2-hydroxypropyltripropylammoniumiodide, 3-iodo-2-hydroxypropyldimethyllaurylammoniumiodide, 3-iodo-2-hydroxypropyldiethyllaurylammoniumiodide, or 3-iodo-2-hydroxypropylethylmethyllaurylammoniumiodide, L-carnitine, carbamylcholine chloride, bethanechol chloride, and betaine hydrazide hydrochloride.

### (Compound that contains an active hydrogen group capable of reacting with an isocyanate group, and two or more types of ionic groups)

Examples thereof include homocysteine acid, and choline dihydrogen citrate.

Among the ionic-group-containing compounds (X), particularly preferred is a compound that contains at least one type of ionic group selected from the group including a carboxylic acid group, a sulfonic acid group, and a quaternary ammonium cation.

### <medium through which the ionic-group-containing compound (X) that contains an active hydrogen group capable of reacting with an isocyanate group and at least one ionic group is dissolved>

The medium through which the ionic-group-containing compound that contains an active hydrogen group capable of reacting with an isocyanate group and at least one ionic group and is used in the present invention is dissolved is water, and ion-exchange water or distilled water is preferably selected. Further, a hydrophilic solvent immiscible with the organic solvent may be added in a range where the effect of the present invention is not impaired.

Further, for the purpose of further stabilizing the W/O emulsion, additives may be added in a range where the effect of the present invention is not impaired. Examples of such additives include water-soluble salts such as sodium carbonate, calcium carbonate, potassium carbonate, sodium phosphate, potassium phosphate, calcium phosphate, sodium chloride, and potassium chloride. These additives may be used alone, or through combination of two or more types.

### <(c) Polyfunctional isocyanate compound having at least two isocyanate groups>

The polyfunctional isocyanate compound used in the present invention may be used without any limitation as long as it is a polyfunctional isocyanate compound having at least two isocyanate groups. Among them, a compound having 2 to 6 isocyanate groups in the molecule is preferred, and a compound having two to three is more preferred.

Further, the component (c) may be (c2) a urethane prepolymer to be described below, which is prepared by a reaction between a bifunctional isocyanate compound and a bifunctional polyol compound (hereinafter, also referred to as a "component (c2)"). As (c2) the urethane prepolymer corresponding to the polyfunctional isocyanate compound, those which are generally used and contain unreacted isocyanate groups may also be used in the present invention without any limitation.

For example, in broad classification, the component (c) may be classified into aliphatic isocyanates, alicyclic isocyanates, aromatic isocyanates, other isocyanates, and (c2) urethane prepolymers. Further, as for the component (c), one type of compound may be used, and a plurality of types of compounds may be used. When the plurality of types of compounds is used, the reference mass is the total amount of the plurality of types of compounds. Specific examples of these isocyanate compounds include following monomers.

### (Aliphatic Isocyanate)

Bifunctional isocyanate monomers such as ethylenediisocyanate, trimethylenediisocyanate, tetramethylenediisocyanate, hexamethylenediisocyanate, octamethylenediisocyanate, nonamethylenediisocyanate, 2,2'-dimethylpentanediisocyanate, 2,2,4-trimethylhexamethylenediisocyanate, decamethylenediisocyanate, butenediisocyanate, 1,3-butadiene-1,4-diisocyanate, 2,4,4-trimethylhexamethylenediisocyanate, 1,6,11-trimethylundecamethylenediisocyanate, 1,3,6-trimethylhexamethylenediisocyanate, 1,8-diisocyanate4-isocyanatemethyloctane, 2,5,7-trimethyl-1,8-diisocyanate5-isocyanatemethyloctane, bis(isocyanateethyl)carbonate, bis(isocyanateethyl)ether, 1,4-butyleneglycoldipropylether-ω,ω'-diisocyanate, lysinediisocyanatemethylester, and 2,4,4,-trimethylhexamethylenediisocyanate (these bifunctional isocyanate monomers correspond to bifunctional polyisocyanate compounds constituting the urethane prepolymer).

### (Alicyclic Isocyanate)

Bifunctional isocyanate monomers such as isophoronediisocyanate, (bicyclo[2.2.1]heptane-2,5-diyl)bismethylenediisocyanate, (bicyclo[2.2.1]heptane-2,6-diyl)bismethylenediisocyanate, 2β,5α-bis(isocyanate)norbornane, 2β,5β-bis(isocyanate)norbornane, 2β,6α-bis(isocyanate)norbornane, 2β,6β-bis(isocyanate)norbornane, 2,6-di(isocyanatemethyl)furan, 1,3-bis(isocyanatemethyl)cyclohexane, dicyclohexylmethane-4,4'-diisocyanate, 4,4-isopropylidenebis(cyclohexylisocyanate), cyclohexanediisocyanate, methylcyclohexanediisocyanate, dicyclohexyldimethylmethanediisocyanate, 2,2'-dimethyldicyclohexylmethanediisocyanate, bis(4-isocyanaten-butylidene)pentaerythritol, dimer acid diisocyanate, 2,5-bis(isocyanatemethyl)-bicyclo[2,2,1]-heptane, 2,6-bis(isocyanatemethyl)-bicyclo[2,2,1]-heptane, 3,8-bis(isocyanatemethyl)tricyclodecane, 3,9-bis(isocyanatemethyl)tricyclodecane, 4,8-bis(isocyanatemethyl)tricyclodecane, 4,9-bis(isocyanatemethyl)tricyclodecane, 1,5-diisocyanatedecalin, 2,7-diisocyanatedecalin, 1,4-diisocyanatedecalin, 2,6-diisocyanatedecalin, bicyclo[4.3.0]nonane-3,7-diisocyanate, bicyclo[4.3.0]nonane-4,8-diisocyanate, bicyclo[2.2.1]heptane-2,5-diisocyanate, bicyclo[2.2.1]heptane-2,6-diisocyanate, bicyclo[2,2,2]octane-2,5-diisocyanate, bicyclo[2,2,2]octane-2,6-diisocyanate, tricyclo[5.2.1.0^{2.6}]decane-3,8-diisocyanate, and tricyclo[5.2.1.0^{2.6}]decane-4,9-diisocyanate (these bifunctional isocyanate monomers correspond to bifunctional polyisocyanate compounds constituting the urethane prepolymer), and polyfunctional isocyanate monomers such as 2-isocyanatemethyl-3-(3-isocyanatepropyl)-5-isocyanatemethylbicyclo[2,2,1]-heptane, 2-isocyanatemethyl-3-(3-isocyanatepropyl)-6-isocyanatemethylbicyclo[2,2,1]-heptane, 2-isocyanatemethyl-2-(3-isocyanatepropyl)-5-isocyanatemethylbicyclo[2,2,1]-heptane, 2-isocyanatemethyl-2-(3-isocyanatepropyl)-6-isocyanatemethylbicyclo[2,2,1]-heptane, 2-isocyanatemethyl-3-(3-isocyanatepropyl)-5-(2-isocyanateethyl)-bicyclo[2,2,1]-heptane, 2-isocyanatemethyl-3-(3-isocyanatepropyl)-6-(2-isocyanateethyl)-bicyclo[2,1,1]-heptane, 2-isocyanatemethyl-2-(3-isocyanatepropyl)-5-(2-isocyanateethyl)-bicyclo[2,2,1]-heptane, 2-isocyanatemethyl-2-(3-isocyanatepropyl)-6-(2-isocyanateethyl)-bicyclo[2,2,1]-heptane, and 1,3,5-tris(isocyanatemethyl)cyclohexane.

### (Aromatic Isocyanate)

Bifunctional isocyanate monomers such as xylenediisocyanate(o-, m-, p-), tetrachloro-m-xylenediisocyanate, methylenediphenyl-4,4'-diisocyanate, 4-chloro-m-xylenediisocyanate, 4,5-dichloro-m-xylenediisocyanate, 2,3,5,6-tetrabrom-p-xylenediisocyanate, 4-methyl-m-xylenediisocyanate, 4-ethyl-m-xylenediisocyanate, bis(isocyanateethyl)benzene, bis(isocyanatepropyl)benzene, 1,3-bis(α,α-dimethylisocyanatemethyl)benzene, 1,4-bis(α,α-dimethylisocyanatemethyl)benzene, α,α,α',α'-tetramethylxylenediisocyanate, bis(isocyanatebutyl)benzene, bis(isocyanatemethyl)naphthalene, bis(isocyanatemethyl)diphenylether, bis(isocyanateethyl)phthalate, 2,6-di(isocyanatemethyl)furan, phenylenediisocyanate(o-,m-,p-), tolylenediisocyanate, ethylphenylenediisocyanate, isopropylphenylenediisocyanate, dimethylphenylenediisocyanate, diethylphenylenediisocyanate, diisopropylphenylenediisocyanate, trimethylbenzenetriisocyanate, benzenetriisocyanate, 1,3,5-triisocyanatemethylbenzene, 1,5-naphthalenediisocyanate, methylnaphthalenediisocyanate, biphenyldiisocyanate, 2,4-tolylenediisocyanate, 2,6-tolylenediisocyanate, 4,4'-diphenylmethanediisocyanate, 2,2'-diphenylmethanediisocyanate, 2,4'-diphenylmethanediisocyanate, 3,3'-dimethyldiphenylmethane-4,4'-diisocyanate, bibenzyl-4,4'-diisocyanate, bis(isocyanatephenyl)ethylene, 3,3'-dimethoxybiphenyl-4,4'-diisocyanate, phenylisocyanatemethylisocyanate, phenylisocyanateethylisocyanate, tetrahydronaphthylenediisocyanate, hexahydrobenzenediisocyanate, hexahydrodiphenylmethane-4,4'-diisocyanate, diphenyletherdiisocyanate, ethyleneglycoldiphenyletherdiisocyanate, 1,3-propyleneglycoldiphenyletherdiisocyanate, benzophenonediisocyanate, diethyleneglycoldiphenyletherdiisocyanate, dibenzofurandiisocyanate, carbazolediisocyanate, ethylcarbazolediisocyanate, dichlorocarbazolediisocyanate, 2,4-tolylenediisocyanate, and 2,6-tolylenediisocyanate (these bifunctional isocyanate monomers correspond to bifunctional polyisocyanate compounds constituting the urethane prepolymer).

Polyfunctional isocyanate monomers such as mesitylylene triisocyanate, triphenylmethanetriisocyanate, polymeric MDI, naphthalene triisocyanate, diphenylmethane-2,4,4'-triisocyanate, 3-methyldiphenylmethane-4,4',6-triisocyanate, 4-methyl-diphenylmethane-2,3,4',5,6-pentaisocyanate.

### (Other Isocyanates)

Examples of other isocyanates include polyfunctional isocyanates having a burette structure, an uretdione structure, or an isocyanurate structure, in which the main raw materials are diisocyanates such as hexamethylenediisocyanate (e.g., JP 2004-534870 A discloses a method of modifying a burette structure, an uretdione structure, and an isocyanurate structure of aliphatic polyisocyanate) and those which are polyfunctional as adduct bodies with polyols such as trimethylolpropane (disclosed in a book (edited by Keiji Iwata, Polyurethane Resin Handbook, Nikkan Kogyo Shimbun, Ltd. (1987)), etc.).

### ((c2) Urethane Prepolymer)

In the present invention, (c2) the urethane prepolymer obtained by reacting the above-described bifunctional polyisocyanate compound selected from (c) the polyfunctional isocyanate compounds having at least two isocyanate groups with the bifunctional polyol compound to be described below may also be used.

As the bifunctional polyol compound, the followings may be exemplified.

### (Aliphatic Alcohol)

Bifunctional polyol monomers such as ethyleneglycol, diethyleneglycol, propyleneglycol, dipropyleneglycol, butyleneglycol, 1,5-dihydroxypentane, 1,6-dihydroxyhexane, 1,7-dihydroxyheptane, 1,8-dihydroxyoctane, 1,9-dihydroxynonane, 1,10-dihydroxydecane, 1,11-dihydroxyundecane, 1,12-dihydroxydodecane, neopentylglycol, glyceryl monooleate, monoelaidine, polyethyleneglycol, 3-methyl-1,5-dihydroxypentane, dihydroxyneopentyl, 2-ethyl-1,2-dihydroxyhexane, 2-methyl-1,3-dihydroxypropane, polyester polyol (a compound having hydroxy groups only at both ends, which is obtained by a condensation reaction between polyol and polybasic acid), polyether polyol (a compound obtained by ring-opening polymerization of alkylene oxide or a reaction between alkylene oxide and a compound having two or more active hydrogencontaining groups in the molecule, and a modified product thereof, in which hydroxy groups are included only at both ends of the molecule), polycaprolactone polyol (a compound obtained by ring-opening polymerization of ε-caprolactone, which has hydroxy groups only at both ends of the molecule), polycarbonate polyol (a compound obtained by phosgenating one or more types of low molecular weight polyols or a compound obtained by transesterification using ethylenecarbonate, diethylcarbonate, diphenylcarbonate, etc., in which hydroxy groups are included only at both ends of the molecule), and polyacryl polyol (a polyol compound obtained by polymerizing (meth)acrylate acid ester or a vinyl monomer, which has hydroxy groups only at both ends of the molecule).

### (Alicyclic Alcohol)

Bifunctional polyol monomers such as hydrogenated bisphenol A, cyclobutanediol, cyclopentanediol, cyclohexanediol, cycloheptanediol, cyclooctanediol, cyclohexanedimethanol, hydroxypropylcyclohexanol, tricyclo[5,2,1,0^{2,6}]decane-dimethanol, bicyclo[4,3,0]-nonanediol, dicyclohexanediol, tricyclo[5,3,1,1^{3,9}]dodecanediol, bicyclo[4,3,0]nonanedimethanol, tricyclo[5,3,1,1^{3,9}]dodecane-diethanol, hydroxypropyltricyclo[5,3,1,1^{3,9}]dodecanol, spiro[3,4]octanediol, butylcyclohexanediol, 1,1-bicyclohexylidenediol, 1,4-cyclohexanedimethanol, 1,3-cyclohexanedimethanol, 1,2-cyclohexanedimethanol, and o-dihydroxyxylene.

### (Aromatic Alcohol)

Bifunctional polyol monomers such as dihydroxynaphthalene, dihydroxybenzene, bisphenol A, bisphenol F, xyleneglycol, tetrabrombisphenol A, bis(4-hydroxyphenyl)methane, 1,1-bis(4-hydroxyphenyl)ethane, 1,2-bis(4-hydroxyphenyl)ethane, bis(4-hydroxyphenyl)phenylmethane, bis(4-hydroxyphenyl)diphenylmethane, bis(4-hydroxyphenyl)-1-naphthylmethane, 1,1-bis(4-hydroxyphenyl)-1-phenylethane, 2-(4-hydroxyphenyl)-2-(3-hydroxyphenyl)propane, 2,2-bis(4-hydroxyphenyl)butane, 1,1-bis(4-hydroxyphenyl)butane, 2,2-bis(4-hydroxyphenyl)-3-methylbutane, 2,2-bis(4-hydroxyphenyl)pentane, 3,3-bis(4-hydroxyphenyl)pentane, 2,2-bis(4-hydroxyphenyl)hexane, 2,2-bis(4-hydroxyphenyl)octane, 2,2-bis(4-hydroxyphenyl)-4-methylpentane, 2,2-bis(4-hydroxyphenyl)heptane, 4,4-bis(4-hydroxyphenyl)heptane, 2,2-bis(4-hydroxyphenyl)tridecane, 2,2-bis(4-hydroxyphenyl)octane, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-tert-butyl-4-hydroxyphenyl)propane, 2,2-bis(3-cyclohexyl-4-hydroxyphenyl)propane, 2,2-bis(3-allyl-4'-hydroxyphenyl)propane, 2,2-bis(3-methoxy-4-hydroxyphenyl)propane, 2,2-bis(3,5-dimethyl-4-hydroxyphenyl)propane, 2,2-bis(2,3,5,6-tetramethyl-4-hydroxyphenyl)propane, bis(4-hydroxyphenyl)cyanomethane, 1-cyano-3,3-bis(4-hydroxyphenyl)butane, 2,2-bis(4-hydroxyphenyl)hexafluoropropane, 1,1-bis(4-hydroxyphenyl)cyclopentane, 1,1-bis(4-hydroxyphenyl)cyclohexane, 1,1-bis(4-hydroxyphenyl)cycloheptane, 1,1-bis(3-methyl-4-hydroxyphenyl)cyclohexane, 1,1-bis(3,5-dimethyl-4-hydroxyphenyl)cyclohexane, 1,1-bis(3,5-dichloro-4-hydroxyphenyl)cyclohexane, 1,1-bis(3-methyl-4-hydroxyphenyl)-4-methylcyclohexane, 1,1-bis(4-hydroxyphenyl)-3,3,5-trimethylcyclohexane, 2,2-bis(4-hydroxyphenyl)norbornane, 2,2-bis(4-hydroxyphenyl)adamantane, 4,4'-dihydroxydiphenylether, 4,4'-dihydroxy-3,3'-dimethyldiphenylether, ethyleneglycolbis(4-hydroxyphenyl)ether, 4,4'-dihydroxydiphenylsulfide, 3,3'-dimethyl-4,4'-dihydroxydiphenylsulfide, 3,3'-dicyclohexyl-4,4'-dihydroxydiphenylsulfide, 3,3'-diphenyl-4,4'-dihydroxydiphenylsulfide, 4,4'-dihydroxydiphenylsulfoxide, 3,3'-dimethyl-4,4'-dihydroxydiphenylsulfoxide, 4,4'-dihydroxydiphenylsulfone, 4,4'-dihydroxy-3,3'-dimethyldiphenylsulfone, bis(4-hydroxyphenyl)ketone, bis(4-hydroxy-3-methylphenyl)ketone, 7,7'-dihydroxy-3,3',4,4'-tetrahydro-4,4,4',4'-tetramethyl-2,2'-spirobi(2H-1-benzopyran), trans-2,3-bis(4-hydroxyphenyl)-2-butene, 9,9-bis(4-hydroxyphenyl)fluorene, 3,3-bis(4-hydroxyphenyl)-2-butanone, 1,6-bis(4-hydroxyphenyl)-1,6-hexanedione, 4,4'-dihydroxybiphenyl, m-dihydroxyxylene, p-dihydroxyxylene, 1,4-bis(2-hydroxyethyl)benzene, 1,4-bis(3-hydroxypropyl)benzene, 1,4-bis(4-hydroxybutyl)benzene, 1,4-bis(5-hydroxypentyl)benzene, 1,4-bis(6-hydroxyhexyl)benzene, 2,2-bis[4-(2"-hydroxyethyloxy)phenyl]propane, hydroquinone, and resorcin.

### (Production method of (c2) urethane prepolymer)

(c2) the urethane prepolymer is produced by reacting the above-described bifunctional polyisocyanate compound with the bifunctional polyol compound. Meanwhile, in the present invention, (c2) the urethane prepolymer has to have isocyanate groups at both ends of the molecule. The production method of (c2) the urethane prepolymer having isocyanate groups at both ends may be a conventionally known method without particular limitation. Examples thereof include a production method having a range of 1<(n5)/(n6)≤2.3 in which the number of moles of isocyanate groups in the bifunctional polyisocyanate compound is (n5) and the number of moles of groups having active hydrogens in the bifunctional polyol is (n6). When two or more types of bifunctional polyisocyanate compounds are used, the number of moles (n5) of the isocyanate groups is the total number of moles of isocyanate groups of these bifunctional polyisocyanate compounds. Further, when two or more types of bifunctional polyols are used, the number of moles (n6) of the groups having active hydrogens is the total number of moles of active hydrogens of these bifunctional polyols.

Further, although not particularly limited, in (c2) the urethane prepolymer, an isocyanate equivalent (a value obtained by dividing the molecular weight of the (c2) urethane prepolymer by the number of isocyanate groups in one molecule) is preferably 300 to 5000, more preferably 500 to 3000, particularly preferably 700 to 2000. Further, (c2) the urethane prepolymer in the present invention preferably has a linear shape synthesized from a bifunctional isocyanate group-containing monomer and a bifunctional polyol. In this case, the number of isocyanate groups in one molecule is two.

The isocyanate equivalent of (c2) the urethane prepolymer may be obtained by quantifying isocyanate groups included in (c2) the urethane prepolymer in accordance with JIS K 7301. The isocyanate groups may be quantified by the following back titration method. First, (c2) the obtained urethane prepolymer is dissolved in a dry solvent. Next, di-n-butylamine clearly in excess of the amount of isocyanate groups included in (c2) the urethane prepolymer, whose concentration is already known, is added to the dry solvent, and all isocyanate groups of (c2) the urethane prepolymer are reacted with di-n-butylamine. Then, unconsumed di-n-butylamine (not involved in the reaction) is titrated with acid, and the amount of consumed di-n-butylamine is obtained. Since the amount of the consumed di-n-butylamine is the same as the isocyanate groups included in (c2) the urethane prepolymer, the isocyanate equivalent may be obtained. Further, since (c2) the urethane prepolymer is a linear urethane prepolymer having isocyanate groups at both ends, the number average molecular weight of (c2) the urethane prepolymer is twice the isocyanate equivalent. The molecular weight of (c2) the urethane prepolymer is likely to match the value measured by gel permeation chromatography (GPC). When (c2) the urethane prepolymer and the bifunctional isocyanate group-containing monomer are used in combination, a mixture of two may be measured according to the method.

Further, when the isocyanate content of (c2) the urethane prepolymer is (I) (molality (mol/kg)) and the urethane bond content present in the (c2) urethane prepolymer is (U) (molality (mol/kg)), it is desirable that 1≤(U)/(I)≤10. This range also similarly applies to a case where (c2) the urethane prepolymer and the bifunctional isocyanate group-containing monomer are used in combination.

The isocyanate content ((I); molality (mol/kg)) is a value obtained by multiplying the reciprocal of the isocyanate equivalent by 1000. Further, regarding the urethane bond content ((U) molality (mol/kg)) present in the urethane prepolymer, a theoretical value may be obtained by the following method. That is, assuming that the content of isocyanate groups which are present, prior to the reaction, in the bifunctional polyol, and the bifunctional polyisocyanate compound constituting (c2) the urethane prepolymer is the total isocyanate content ((aI); molality (mol/kg)), the urethane bond content ((U); molality (mol/kg)) is a value obtained by subtracting the isocyanate content ((I); molality (mol/kg)) from the content of all isocyanate groups in the bifunctional polyisocyanate compound prior to reaction ((aI); molality (mol/kg)) ((U)=(aI)-(I)).

Further, in the reaction of (c2) the urethane prepolymer, if necessary, heating or addition of an urethanization catalyst is also possible. Any suitable urethanization catalyst may be used, and as a specific example, urethanization catalysts to be described below may be used.

In view of the strength of formed microballoon, or the reactivity control, as (c) the polyfunctional isocyanate compound having at least two isocyanate groups, which is used in the present invention, most preferable examples include: polyfunctional isocyanates having a burette structure, an uretdione structure, or an isocyanurate structure, in which the main raw materials are diisocyanates such as alicyclic isocyanates, e.g., isophoronediisocyanate, 1,3-bis(isocyanatemethyl)cyclohexane, and (bicyclo[2.2. 1]heptane-2,5(2,6)-diyl)bismethylenediisocyanate, aromatic isocyanates, e.g., 2,4-tolylenediisocyanate, 2,6-tolylenediisocyanate, 4,4'-diphenylmethanediisocyanate, and xylenediisocyanate(o-,m-,p-), hexamethylenediisocyanate or tolylenediisocyanate; polyfunctional isocyanates as adduct bodies with trifunctional or higher polyols; or (B12) a urethane prepolymer.

The above-described polyfunctional isocyanate compound having at least two isocyanate groups may also be used for the isocyanate group-containing compound used for the urethane resin used in the CMP polishing pad of the present invention.

Among them, in the urethane resin used in the CMP polishing pad, a particularly preferable isocyanate compound may be (B12) the urethane prepolymer.

### <(d) Active hydrogen group-containing compound which contains no ionic group and is selected from polyol, polyamine, or a compound having both a hydroxy group and an amino group>

For the active hydrogen group-containing compound which contains no ionic group and is selected from polyol, polyamine, or a compound having both a hydroxy group and an amino group, which is used in the present invention, any water-soluble compound that contains no ionic group, contains at least two active hydrogen groups, and is selected from polyol, polyamine, or a compound having both a hydroxy group and an amino group may be used without limitation.

The water-soluble compound in the present invention is a compound that is at least partially soluble in water, and has a high affinity in a hydrophilic phase than in a hydrophobic phase. In general, those having a solubility of 1 g/l in a hydrophilic solvent such as water at room temperature (at least 25°C) may be selected. Preferably, a water-soluble compound having a solubility of 20 g/l or more in a hydrophilic solvent at 25°C may be exemplified.

As such a water-soluble compound, i.e., the compound having polyol, polyamine, or both a hydroxy group and an amino group, which contains no ionic group and contains at least two active hydrogens, specific examples will be described below.

The water-soluble polyol is polyfunctional alcohol having two or more hydroxy groups in the molecule. Specific examples thereof include bifunctional polyols such as ethyleneglycol, diethyleneglycol, triethyleneglycol, polyethyleneglycol, propyleneglycol, dipropyleneglycol, tripropyleneglycol, polypropyleneglycol, neopentylglycol, trimethyleneglycol, 1,2-butanediol, 1,3-butanediol, 2,3-butanediol, 1,4-butanediol, 1,5-pentanediol, hexyleneglycol, 1,6-hexanediol, and 2-butene-1,4-diol, trifunctional polyols such as glycerin, trimethylolethane, and trimethylolpropane, tetrafunctional polyols such as pentaerythritol, erythritol, diglycerol, diglycerin, and ditrimethylolpropane, pentafunctional polyols such as arabitol, hexafunctional polyols such as dulcitol, sorbitol, mannitol, dipentaerythritol or triglycerol heptafunctional polyols such as volemitol, nonafunctional polyols such as isomalto, maltitol, isomaltitol or lactitol, and water-soluble polymers such as cellulose-based compounds (e.g., methylcellulose, ethylcellulose, hydroxyethylcellulose, ethylhydroxyethylcellulose, carboxymethylcellulose, hydroxypropylcellulose and saponified products thereof), starch, dextrin, cyclic dextrin, chitin, polyvinylalcohol, and polyglycerin.

The water-soluble polyamine is polyfunctional amine having two or more amino groups in the molecule. Specific examples thereof include aliphatic amines such as ethylenediamine, 1,3-propylenediamine, 1,4-diaminobutane (putrescine), 1,6-hexamethylenediamine, 1,8-diaminooctane, 1,9-diaminononane, 1,10-diaminodecane, 1,11-diaminoundecane, 1,12-diaminododecane, dipropylenetriamine, bishexamethylenetriamine, tris(2-aminoethyl)amine, tris(3-aminopropyl)amine, 3,3',3"-nitrilotris(propionamide), diethylenetriamine, triethylenetetramine, and tetraethylenepentamine, alicyclic amines such as piperazine, 2-methylpiperazine, isophoronediamine, and cyclohexyldiamine, aromatic amines such as 4,4'-methylenebis(o-chloroaniline) (MOCA), 2,6-dichloro-p-phenylenediamine, 4,4'-methylenebis(2,3-dichloroaniline), 4,4'-methylenebis(2-ethyl-6-methylaniline), 3,5-bis(methylthio)-2,4-toluenediamine, 3,5-bis(methylthio)-2,6-toluenediamine, 3,5-diethyltoluene-2,4-diamine, 3,5-diethyltoluene-2,6-diamine, trimethyleneglycol-di-p-aminobenzoate, polytetramethyleneglycol-di-p-aminobenzoate, 4,4'-diamino-3,3',5,5'-tetraethyldiphenylmethane, 4,4'-diamino-3,3'-diisopropyl-5,5'-dimethyldiphenylmethane, 4,4'-diamino-3,3',5,5'-tetraisopropyldiphenylmethane, 1,2-bis(2-aminophenylthio)ethane, 4,4'-diamino-3,3'-diethyl-5,5'-dimethyldiphenylmethane, N,N'-di-sec-butyl-4,4'-diaminodiphenylmethane, 3,3'-diethyl-4,4'-diaminodiphenylmethane, m-xylenediamine, N,N'-di-sec-butyl-p-phenylenediamine, m-phenylenediamine, p-xylenediamine, p-phenylenediamine, 3,3'-methylenebis(methyl-6-aminobenzoate), 2,4-diamino-4-chlorobenzoic acid-2-methylpropyl, 2,4-diamino-4-chlorobenzoic acid-isopropyl, 2,4-diamino-4-chlorophenylacetic acid-isopropyl, terephthalic acid-di-(2-aminophenyl)thioethyl, diphenylmethanediamine, tolylenediamine, piperazine, 1,3,5-benzenetriamine, and polyamine such as melamine; hydrazine, polyethyleneimines, and polyoxyalkyleneamines.

The compound having both a water-soluble hydroxy group and an amino group is a polyfunctional water-soluble compound having a total of two or more hydroxy groups and amino groups in the molecule. Specific examples thereof include hydroxylamine, monoethanolamine, 3-amino-1-propanol, 2-amino-2-hydroxymethylpropane-1,3-diol, 2-hydroxyethylethylenediamine, 2-hydroxyethylpropylenediamine, N,N-bis(2-hydroxyethyl)ethylenediamine, N,N-bis(2-hydroxypropyl)ethylenediamine, N,N-di-2-hydroxypropylpropylenediamine, N-methylethanolamine, diethanolamine, and chitosan.

As for these compounds, one type may be used alone, or a combination of two or more types may also be used.

For (d) the active hydrogen group-containing compound, i.e., at least one selected from the group including polyol, polyamine, and a compound having both a hydroxy group and an amino group, which is used in the present invention, the most preferable example is preferably selected from the above-described water-soluble polyols, or the water-soluble polyamines. Among them, particularly preferable examples include bifunctional polyols such as ethyleneglycol, diethyleneglycol, propyleneglycol, neopentylglycol, 1,2-butanediol, 1,3-butanediol, 2,3-butanediol, and 1,4-butanediol, trifunctional polyols such as glycerin, trimethylolethane, and trimethylolpropane, tetrafunctional polyols such as pentaerythritol, erythritol, diglycerol, diglycerin, and ditrimethylolpropane, pentafunctional polyols such as arabitol, hexafunctional polyols such as dulcitol, sorbitol, mannitol, dipentaerythritol or triglycerol, cyclic dextrin, ethylenediamine, propylenediamine, 1,4.-diaminobutane, hexamethylenediamine, dipropylenetriamine, tris(2-aminoethyl)amine, diethylenetriamine, triethylenetetramine, and tetraethylenepentamine.

Among them, it is desirable that the most preferable component (d) in the present invention is an active hydrogen group-containing compound selected from polyamine, or a compound having both a hydroxy group and an amino group. In such a case, it becomes possible to increase the strength of the resin film of the microballoon. Among them, more preferable examples include ethylenediamine, propylenediamine, 1,4-diaminobutane, hexamethylenediamine, tris(2-aminoethyl)amine, tris(3-aminopropyl)amine, isophoronediamine, diethylenetriamine, 2-amino-2-hydroxymethylpropane-1,3-diol, 2-hydroxyethylethylenediamine, 2-hydroxyethylpropylenediamine, N,N-bis(2-hydroxyethyl)ethylenediamine, N,N-bis(2-hydroxypropyl)ethylenediamine, and N,N-di-2-hydroxypropylpropylenediamine.

### <(e) Monofunctional active hydrogen compound containing only one active hydrogen group selected from an amino group and a hydroxy group>

In the present invention, as the monofunctional active hydrogen compound containing only one active hydrogen group selected from an amino group and a hydroxy group, a conventionally known compound may be used without particular limitation.

Examples of thereof include monofunctional alcohols, polyalkyleneglycolmono-substituted ethers, polyalkyleneglycol mono esters such as lower or higher fatty acid and ethylene oxide condensate, and monofunctional amines. Specific examples thereof include the followings.

### (Monofunctional Alcohol)

Methylalcohol, ethylalcohol, n-propylalcohol, isopropylalcohol, n-butylalcohol, isobutylalcohol, t-butylalcohol, 1-pentylalcohol, 1-hexylalcohol, 1-heptylalcohol, 3-methyl-1-hexylalcohol, 4-methyl-1-hexylalcohol, 2-ethyl-1-hexylalcohol, 5-methyl-1-heptylalcohol, 1-octylalcohol, 1-nonanol, 1-decanol, 3,7-dimethyl-1-octanol, 1-dodecanol, 1-undecanol, 1-tridecanol, 3,3,5-trimethyl-1-hexanol, 1-tetradecanol, 1-pentadecanol, 1-hexadecanol, 1-heptadecanol, 1-octadecanol, 1-eicosanol, 1-docosanol, and 1-tricosanol

### (Polyalkyleneglycolmono-Substituted Ether)

2 -methoxymethanol, diethylglycolmonomethylether, triethyleneglycolmonomethylether, tetraethyleneglycolmonomethylether, pentaethyleneglycolmonomethylether, hexaethyleneglycolmonomethylether, heptaethyleneglycolmonomethylether, octaethyleneglycolmonomethylether, nonaethyleneglycolmonomethylether, decaethyleneglycolmonomethylether, dodecaethyleneglycolmonomethylether, 1-methoxy-2-propanol, 1-methoxy-2-propanol, 1-isopropyl-2-propanol, 1-methoxy-2-butanol, 1,3-diethoxypropanol, polyethyleneglycolmonooleylether, and polyoxyethylenelaurylether

### (Polyalkyleneglycolmonoester such as lower or higher fatty acid and ethylene oxide condensate) polyethyleneglycolmonolaurate, and polyethyleneglycolmonostearate

### (Monofunctional Amine)

Ethylamine, diethylamine, n-propylamine, di-n-propylamine, isopropylamine, n-butylamine, di-n-butylamine, isobutylamine, n-pentylamine, isopentylamine, n-hexylamine, cyclohexylamine, N-methylcyclohexylamine, n-heptylamine, n-octylamine, 2-ethylhexylamine, n-nonylamine, n-decylamine, n-dodecylamine, n-tetradecylamine, n-hexadecylamine, n-octadecylamine, benzylamine, dibenzylamine, and phenethylamine

In (e) the monofunctional active hydrogen compound containing only one active hydrogen group selected from an amino group and a hydroxy group, which is used in the present invention, the molecular weight is not particularly limited. However, when the microballoon obtained through the method of the present invention is blended with the resin, for example, in a case where the microballoon is blended with the urethane resin in order to foam the urethane resin, in consideration of dispersion in the urethane resin, the molecular weight of (e) the monofunctional active hydrogen compound containing only one active hydrogen group selected from an amino group and a hydroxy group is preferably 130 or less.

For (e) the monofunctional active hydrogen compound containing only one active hydrogen group selected from an amino group and a hydroxy group, which has a molecular weight of 130 or less, specific examples include the followings. These may be used alone or in combination of two or more types.

### (Monofunctional active hydrogen compound having a molecular weight of 130 or less, which contains only one hydroxy group)

Methylalcohol, ethylalcohol, n-propylalcohol, isopropylalcohol, n-butylalcohol, isobutylalcohol, t-butylalcohol, 1-pentylalcohol, 1-hexylalcohol, 1-heptylalcohol, 2-methoxymethanol, and diethyleneglycolmonomethylether

### (Monofunctional active hydrogen compound having a molecular weight of 130 or less, which contains only one amino group)

Ethylamine, n-propylamine, isopropylamine, n-butylamine, isobutylamine, n-pentylamine, isopentylamine, n-hexylamine, cyclohexylamine, n-heptylamine, n-octylamine, and 2-ethylhexylamine

In the present invention, among them, the monofunctional active hydrogen compound having a molecular weight of 130 or less, which contains only one hydroxy group, is suitably used.

### <Urethanization Catalyst>

Any suitable urethanization catalyst may be used in the present invention. Specific examples thereof include triethylenediamine, hexamethylenetetramine, N,N-dimethyloctylamine, N,N,N',N'-tetramethyl- 1,6-diaminohexane, 4,4'-trimethylenebis(1-methylpiperidine), 1,8-diazabicyclo(5,4,0)-7-undecene, dimethyltindichloride, dimethyltinbis(isooctylthioglycolrate), dibutyltindichloride, dibutyltindilaurate, dibutyltinmaleate, dibutyltinmaleate polymer, dibutyltindiricinolate, dibutyltinbis (dodecylmercaptide), dibutyltinbis(isooctylthioglycolrate), dioctyltindichloride, dioctyltinmaleate, dioctyltinmaleate polymer, dioctyltinbis(butylmaleate), dioctyltindilaurate, dioctyltindiricinolate, dioctyltindioleate, dioctyltindi(6-hydroxy)caproate, dioctyltinbis(isooctylthioglycolrate), didodecyltindiricinolate, and various metal salts, e.g., copper oleate, copper acetylacetonate, iron acetylacetonate, iron naphthenate, iron lactate, iron citrate, iron gluconate, potassium octanate, and 2-ethylhexyl titanate.

### (Polyrotaxane)

In the urethane resin used in the CMP polishing pad of the present invention, as described above, as the active hydrogen group-containing compound which has an active hydrogen polymerizable with an isocyanate group, active hydrogen group-containing polyrotaxane which has an active hydrogen polymerizable with an isocyanate group is suitable.

The polyrotaxane is composed of an axial molecule and a cyclic molecule as described above. More specifically, the polyrotaxane has a structure where a chain-like axial molecule passes through the inside of rings of a plurality of cyclic molecules, and bulky groups are bonded to both ends of the axial molecule. The polyrotaxane used in the present invention is not particularly limited, but, examples thereof include polyrotaxane described in International Application No. 2018/092826.

In the polyrotaxane in the present invention, as the axial molecule, polyethyleneglycol, polyisoprene, polyisobutylene, polybutadiene, polypropyleneglycol, polytetrahydrofuran, polydimethylsiloxane, polyethylene, polypropylene, polyvinylalcohol or polyvinylmethylether, and polyethyleneglycol are suitably used.

The molecular weight of the axial molecule is not particularly limited, but if it is too large, the viscosity tends to be increased, and if it is too small, the mobility of the cyclic molecule tends to be decreased. From this point of view, it is desirable that the weight average molecular weight Mw of the axial molecule is in a range of 1,000 to 100,000, particularly 2,000 to 80,000, particularly preferably 3,000 to 50,000.

The cyclic molecule has a ring having a size by which inclusion of the above-described axial molecule may be made. As such a ring, a cyclodextrin ring is preferred. The cyclodextrin ring includes an α-form (diameter in the ring: 0.45 to 0.6 nm), a β-form (diameter in the ring: 0.6 to 0.8 nm), and a γ-form (diameter in the ring: 0.8 to 0.95 nm). In particular, anα-cyclodextrin ring is most preferable.

Further, in the polyrotaxane, the plurality of cyclic molecules is included in one axial molecule. In general, when the maximum number of inclusions of cyclic molecules that may be included per axial molecule is 1, it is desirable that the number of inclusions of the cyclic molecules is in a range of 0.001 to 0.6, more preferably 0.002 to 0.5, further preferably 0.003 to 0.4.

Further, in the polyrotaxane, it is desirable to introduce a side chain having an active hydrogen group, into the cyclic molecule, considering that the urethane resin is obtained.

Examples of the active hydrogen group included in the side chain include at least one type of group selected from a hydroxy group, a thiol group, and an amino group.

The method of introducing the active hydrogen group included in the side chain is not particularly limited, but suitably employed is a method in which an organic chain having an active hydrogen group is reacted with the functional group of the cyclic molecule by using ring-opening polymerization, radical polymerization, cation polymerization, anion polymerization, etc. so as to introduce a desired side chain.

The bulky group is not particularly limited as long as the group prevents elimination of the cyclic molecule from the axial molecule, but from the viewpoint of bulkiness, for example, an adamantyl group, a trityl group, a fluoresceinyl group, a dinitrophenyl group, and a pyrenyl group may be exemplified. Among them, in particular, in terms of ease of introduction, the adamantyl group is preferred.

### [Example]

Next, the present invention will be described in detail by using Examples and Comparative Examples, and the present invention is not limited by the present Examples. Each component and the evaluation method used in the following Examples and Comparative Examples are as follows.

### (1) Each component

(a) Component
   Surfactant
      - Sorbitan monostearate
   Organic solvent
      - n-hexane
      - Corn oil
   Ionic-group-containing compound (X) that contains an active hydrogen group capable of reacting with an isocyanate group and at least one ionic group, in a component
(b)
   - Dimethylolpropionic acid
   - N,N-bis(2-hydroxyethyl)-2-aminoethanesulfonic acid
   - bis(2-hydroxyethyl)dimethylammoniumchloride
(c) Polyfunctional isocyanate compound having at least two isocyanate groups
   - hexamethylenediisocyanate
   - 2,4-tolylenediisocyanate
(d) Active hydrogen group-containing compound selected from polyol, polyamine, or a compound having both a hydroxy group and an amino group
   - tris(2-aminoethyl)amine
(e) Monofunctional active hydrogen compound containing only one active hydrogen group selected from an amino group and a hydroxy group
   - methyl alcohol (molecular weight: 32)
   - 1-eicosanol (molecular weight: 298)

### (2) Evaluation Method

### (2-1) Ionic Group Measurement Method

A resin was produced by the method described below, and the presence or absence of ionic groups on the microballoon inner surface was measured by microinfrared spectroscopy.

In a flask equipped with a nitrogen introduction pipe, a thermometer, and a stirrer under a nitrogen atmosphere, 1000 g of 2,4-tolylenediisocyanate and 1800 g of polyoxytetramethyleneglycol (number average molecular weight; 1000) were reacted under a nitrogen atmosphere at 70°C for 4 h. Then, 130 g of diethyleneglycol was added, and further reacted at 70°C for 4 h to obtain a terminal isocyanateurethane prepolymer (Pre-1) having an iso(thio)cyanate equivalent of 540.

84 parts by mass of sufficiently degassed Pre-1, 16 parts by mass of dimethylthio toluenediamine, and 3 parts by mass of microballoon were mixed, and stirred by a planetary stirrer to obtain a uniform curable composition. The curable composition was poured into a mold, and cured at 100°C for 15 h to obtain a urethane resin. Then, the resin was sliced, and the slicing surface was measured by microinfrared spectroscopy. Three measurement points, i.e., concave points of microballoon present in the slicing cross-section were measured.

### (2-2) Bulk Density

The bulk density was measured as follows. The microballoon passed through a sieve of 1000 µm, and was added to a measuring cylinder having a capacity of 100 mL, and then was tapped 1000 times. Next, the bulk density [g/cm³] was obtained from the volume and mass of the microballoon in the container.

### (2-2) Polishing Pad Evaluation Method

### (2-2-1) Polishing Rate

The polishing rate (µm/h) when polishing was carried out under the following conditions was measured. The polishing rate is an average value of 100 wafers.

Polishing pad: a pad having a size of 380 mmϕ and a thickness of 1 mm, in which concentric grooves are formed on the surface
Polishing target object: 2-inch sapphire wafer
Slurry: FUJIMI COMPOL 80 undiluted solution
Pressure: 411 g/cm²
Rotation speed: 60 rpm
Time: 1 h

### (2-2-2) Scratch Resistance

The presence or absence of scratches on 100 wafers when polishing was carried out under the conditions described in the above (2-2-1) was checked. The evaluation was carried out by the following criteria.
1: in the measurement with a laser microscope, no defect is present on all 100 wafers
2: in the measurement with a laser microscope, defects can be checked on 1 to 2 of 100 wafers
3: in the measurement with a laser microscope, defects can be checked on 3 to 5 of 100 wafers
4: in the measurement with a laser microscope, defects can be checked on 6 to 9 of 100 wafers
5: in the measurement with a laser microscope, defects can be checked on 10 or more of 100 wafers

### (2-2-3) Density

The density (g/cm³) was measured by (DSG-1) manufactured by TOYOSEIKI.

### (2-2-4) Hardness

The shore D hardness was measured by a durometer manufactured by KOBUNSHI KEIKI in accordance with JIS standard (hardness test) K6253. The measurement was performed through overlapping up to a thickness of 6 mm. The one having a comparatively low hardness was measured by the shore A hardness, and the one having a comparatively high hardness was measured by the shore D hardness.

### (2-2-5) Hysteresis Loss

The resin in a shape of dumbbell No. 8 with a thickness of 2 mm, which was obtained by punching, was stretched by 20 mm by an autograph AG-SX manufactured by SHIMADZU at 10 mm/min. Then, when the resin was restored until the stress became zero, the hysteresis loss (%) was measured.

### [Ionic-Group-Containing Microballoon]

### <Example 1>

### Production method of microballoon 1

5 parts by mass of sorbitan monostearate was dissolved in 100 parts by mass of n-hexane to prepare a component (a). Then, 1 part by mass of dimethylolpropionic acid (amount of carboxylic acid 7.5 mmol/g), and 4 parts by mass of tris(2-aminoethyl)amine were dissolved in 50 parts by mass of water to prepare a component (b). Then, the prepared component (a) and the component (b) were mixed, and were stirred by using a high-speed shear type disperser under conditions of 2,000 rpm×15 min and 25°C to prepare a W/O emulsion. At 25°C, 10 parts by mass of (c) hexamethylenediisocyanate dissolved in 17 parts by mass of n-hexane was added dropwise to the adjusted W/O emulsion. After the dropping, reaction was performed through mixing and stirring for 10 min, and then a microballoon dispersion liquid made of polyurethaneurea was obtained. A microballoon was taken out from the obtained microballoon dispersion liquid through filter paper filtration, and the collected microballoon was dispersed in 50 parts by mass of methylalcohol and was stirred at 25°C for 12 h. The microballoon was taken out again through filter paper filtration, and the surface thereof was dried by a wind dryer of 60°C for 12 h to obtain microballoon 1.

The acquired microballoon was a hollow microballoon whose inside was hollow, and the average primary particle size was about 40 µm. The bulk density was 0.3 g/cm³, and thus due to good dispersibility, primary particles did not aggregate with each other.

Further, regarding the obtained microballoon, ionic groups on the microballoon inner surface were checked by the above-described ionic group measurement method, and as a result, a carboxylic acid peak was confirmed in the vicinity of 1690 cm⁻¹.

The amount of ionic groups included in the ionic-group-containing microballoon is calculated to be 0.51 mmol/g from the blending amount of the ionic-group-containing compound containing at least one ionic group.

### <Comparative Example 1>

### Production method of microballoon 2

5 parts by mass of sorbitan monostearate was dissolved in 100 parts by mass of n-hexane to prepare a component (a). Then, 5 parts by mass of tris(2-aminoethyl)amine was dissolved in 50 parts by mass of water to prepare a tris(2-aminoethyl)amine aqueous solution. Then, the prepared component (a) and the tris(2-aminoethyl)amine aqueous solution were mixed, and were stirred by using a high-speed shear type disperser under conditions of 2,000 rpm×15 min and 25°C to prepare a W/O emulsion. At 25°C, 9 parts by mass of (c) hexamethylenediisocyanate dissolved in 17 parts by mass of n-hexane was added dropwise to the adjusted W/O emulsion. After the dropping, reaction was performed through mixing and stirring for 10 min, and then a microballoon dispersion liquid made of polyurea was obtained. A microballoon was taken out from the obtained microballoon dispersion liquid through filter paper filtration, and the collected microballoon was dispersed in 50 parts by mass of methylalcohol, and was stirred at 25°C for 12 h. The microballoon was taken out again through filter paper filtration, and the surface thereof was dried by a wind dryer of 60°C for 12 h to obtain microballoon 2.

The acquired microballoon was a hollow microballoon whose inside was hollow and the average primary particle size was about 40 µm. The bulk density was 0.3 g/cm³, and thus due to good dispersibility, primary particles did not aggregate with each other.

Further, regarding the obtained microballoon, ionic groups on the microballoon inner surface were checked by the above-described ionic group measurement method, and as a result, an ionic group-derived peak was not confirmed.

### <Comparative Example 2>

### Production method of microballoon 3

A solution in which 10 parts by mass of hexamethylenediisocyanate was dissolved in 50 parts by mass of toluene was mixed with a solution in which 2 parts by mass of polyvinylalcohol (completely saponified type, degree of polymerization: about 500) was dissolved in 100 parts by mass of water, and then stirring was performed by using a high-speed shear type disperser under conditions of 2,000 rpm×15 min and 25°C to prepare an O/W emulsion. To the adjusted O/W emulsion, a solution in which 4 parts by mass of tris(2-aminoethyl)amine and 1 part by mass of dimethylolpropionic acid (amount of carboxylic acid 17.9 mmol/g) were dissolved in 10 parts by mass of water was added dropwise. After the dropping, reaction was performed through mixing and stirring for 10 min, and then a microballoon dispersion liquid made of polyurethaneurea was obtained. A microballoon was taken out from the obtained microballoon dispersion liquid through filter paper filtration, and the collected microballoon was dispersed in 50 parts by mass of methylalcohol and was stirred at 25°C for 12 h. The microballoon was taken out again through filter paper filtration, and the surface thereof was dried by a wind dryer of 60°C for 12 h to obtain microballoon 3.

The acquired microballoon was a hollow microballoon whose inside was hollow and the average primary particle size was about 20 µm. The bulk density was 0.3 g/cm³, and thus due to good dispersibility, primary particles did not aggregate with each other.

Further, regarding the obtained microballoon, the presence or absence of ionic groups on the microballoon inner surface was checked by the above-described ionic group measurement method, and as a result, an ionic group-derived peak was not confirmed.

### <Example 2>

### Production method of microballoon 4

10 parts by mass of sorbitan monooleate was added to a solution containing 50 parts by mass of corn oil and 50 parts by mass of hexane and was dissolved to prepare a component (a). Then, 2 parts by mass of dimethylolpropionic acid as an ionic-group-containing compound that contains an active hydrogen group capable of reacting with an isocyanate group and at least one ionic group and 8 parts by mass of tris(2-aminoethyl)amine as a component (d) were dissolved in 50 parts by mass of water to prepare a component (b). Then, the prepared component (a) and the component (b) were mixed, and were stirred by using a high-speed shear type disperser under conditions of 2000 rpmx30 min and 25°C to prepare a W/O emulsion. At 25°C, 16.6 parts by mass of 2,4-tolylenediisocyanate as a component (c) dissolved in 2.5 parts by mass of corn oil and 5 parts by mass of hexane was added dropwise to the adjusted W/O emulsion. After the dropping, reaction was performed through stirring at 60°C for 1 h, and then a microballoon dispersion liquid made of polyurethaneurea was obtained. Next, 10 parts by mass of methanol was added dropwise thereto, and then, stirring was performed at 60°C for 1 h. A microballoon was taken out from the obtained microballoon dispersion liquid through filter paper filtration, and was dried by a wind dryer of 60°C for 12 h to obtain microballoon 4.

The acquired microballoon 4 was a hollow microballoon whose inside was hollow and the average primary particle size was about 25 µm. The bulk density was 0.15 g/cm³, and thus due to good dispersibility, primary particles did not aggregate with each other.

Further, regarding the obtained microballoon, ionic groups on the microballoon inner surface were checked by the above-described ionic group measurement method, and as a result, a carboxylic acid peak was confirmed in the vicinity of 1690 cm⁻¹.

The amount of ionic groups included in the ionic-group-containing microballoon is calculated to be 0.51 mmol/g from the blending amount of the ionic-group-containing compound containing at least one ionic group.

### <Example 3>

### Production method of microballoon 5

Microballoon 5 was obtained in the same manner as in the production method of microballoon 4 in Example 2 except that in Example 2, dimethylolpropionic acid as the ionic-group-containing compound that contains an active hydrogen group capable of reacting with an isocyanate group and at least one ionic group was changed to 5 parts by mass, tris(2-aminoethyl)amine as the component (d) was changed to 5 parts by mass, and 2,4-tolylenediisocyanate as the component (c) was changed to 14.8 parts by mass.

The acquired microballoon 5 was a hollow microballoon whose inside was hollow and the average primary particle size was about 30 µm. The bulk density was 0.15 g/cm³, and thus due to good dispersibility, primary particles did not aggregate with each other.

Further, regarding the obtained microballoon, ionic groups on the microballoon inner surface were checked by the above-described ionic group measurement method, and as a result, a carboxylic acid peak was confirmed in the vicinity of 1690 cm⁻¹.

The amount of ionic groups included in the ionic-group-containing microballoon is calculated to be 1.36 mmol/g from the blending amount of the ionic-group-containing compound containing at least one ionic group.

### <Example 4>

### Production method of microballoon 6

Microballoon 6 was obtained in the same manner as in the production method of microballoon 4 in Example 2 except that in Example 2, dimethylolpropionic acid as the ionic-group-containing compound that contains an active hydrogen group capable of reacting with an isocyanate group and at least one ionic group was changed to 0.5 parts by mass, tris(2-aminoethyl)amine as the component (d) was changed to 9.5 parts by mass, and 2,4-tolylenediisocyanate as the component (c) was changed to 17.6 parts by mass.

The acquired microballoon 6 was a hollow microballoon whose inside was hollow and the average primary particle size was about 30 µm. The bulk density was 0.15 g/cm³, and thus due to good dispersibility, primary particles did not aggregate with each other.

Further, regarding the obtained microballoon, ionic groups on the microballoon inner surface were checked by the above-described ionic group measurement method, and as a result, a carboxylic acid peak was confirmed in the vicinity of 1690 cm⁻¹.

The amount of ionic groups included in the ionic-group-containing microballoon is calculated to be 0.12 mmol/g from the blending amount of the ionic-group-containing compound containing at least one ionic group.

### <Example 5>

### Production method of microballoon 7

Microballoon 7 was obtained in the same manner as in the production method of microballoon 4 in Example 2 except that in Example 2, N,N-bis(2-hydroxyethyl)-2-aminoethane sulfonic acid as the ionic-group-containing compound that contains an active hydrogen group capable of reacting with an isocyanate group and at least one ionic group was changed to 2.9 parts by mass, tris(2-aminoethyl)amine as the component (d) was changed to 7.1 parts by mass, and 2,4-tolylenediisocyanate as the component (c) was changed to 15.0 parts by mass.

The acquired microballoon 7 was a hollow microballoon whose inside was a hollow, and the average primary particle size was about 20 µm. The bulk density was 0.15 g/cm³, and thus due to good dispersibility, primary particles did not aggregate with each other.

Further, regarding the obtained microballoon, ionic groups on the microballoon inner surface were checked by the above-described ionic group measurement method, and as a result, a sulfonic acid peak was confirmed in the vicinity of 1150 cm⁻¹.

The amount of ionic groups included in the ionic-group-containing microballoon is calculated to be 0.54 mmol/g from the blending amount of the ionic-group-containing compound containing at least one ionic group.

### <Example 6>

### Production method of microballoon 8

Microballoon 8 was obtained in the same manner as in the production method of microballoon 4 in Example 2 except that in Example 2, bis(2-hydroxyethyl)dimethylammoniumchloride as the ionic-group-containing compound that contains an active hydrogen group capable of reacting with an isocyanate group and at least one ionic group was changed to 2.3 parts by mass, tris(2-aminoethyl)amine as the component (d) was changed to 7.7 parts by mass, and 2,4-tolylenediisocyanate as the component (c) was changed to 16.1 parts by mass.

The acquired microballoon 8 was a hollow microballoon whose inside was hollow, and the average primary particle size was about 15 µm. The bulk density was 0.2 g/cm³, and thus due to good dispersibility, primary particles did not aggregate with each other.

Further, regarding the obtained microballoon, ionic groups on the microballoon inner surface were checked by the above-described ionic group measurement method, and as a result, a broad peak of ammonium ions was confirmed in the vicinity of 3200 cm⁻¹.

The amount of ionic groups included in the ionic-group-containing microballoon is calculated to be 0.52 mmol/g from the blending amount of the ionic-group-containing compound containing at least one ionic group.

### [Polishing Pad]

### < Production method of polyrotaxane monomer (RX-1) to be used >

Polyrotaxane (RX-1) used in a urethane resin for a polishing pad was obtained by the following prescription according to the method described in International Publication No. WO2018/092826.

For a polymer for forming an axial molecule, 10 g of linear polyethyleneglycol having a molecular weight of 10,000, 100 mg of 2,2,6,6-tetramethyl-1-piperidinyloxyradical, and 1 g of sodium bromide were prepared, and each component was dissolved in 100 ml of water. To this solution, 5 ml of a commercially available sodium hypochlorite aqueous solution (effective chlorine concentration 5%) was added, and was stirred at room temperature for 10 min. Then, ethanol was added in a range of up to a maximum of 5 ml to terminate the reaction. Then, after extraction was performed by using 50 ml of methylene chloride, methylene chloride was distilled off. Then, the resultant product was dissolved in 250 ml of ethanol and reprecipitated at a temperature of -4°C for 12 h, and the solid was collected and dried.

Next, 3 g of the obtained solid and 12 g of α-cyclodextrin were each dissolved in 50 ml of warm water of 70°C, and the obtained solutions were mixed with each other and shaken well. Then, this mixed solution was reprecipitated at a temperature of 4°C for 12 h, and the precipitated inclusion complex was freeze-dried and collected. Next, after at room temperature, 0.13 g of adamantaneamine was dissolved in 50 ml of dimethylformamide, the inclusion complex was added thereto and quickly shaken well. Subsequently, 0.38 g of benzotriazole-1-yl-oxy-tris(dimethylamino)phosphonium hexafluorophosphate was further added thereto, and shaken well. Further, 0.14 ml of diisopropylethylamine was added thereto and shaken well to obtain a slurry-like reagent.

The obtained slurry-like reagent was allowed to stand still at 4°C for 12 h. Then, 50 ml of a dimethylformamide/methanol mixed solvent (a volume ratio 1/1) was added thereto, and mixing and centrifugation were performed and the supernatant was discarded. Further, after washing with the dimethylformamide/methanol mixed solution was performed, washing using methanol and centrifugation were performed to obtain a precipitate. The obtained precipitate was dried by vacuum-drying and then was dissolved in 50 mL of dimethylsulfoxide, and the obtained transparent solution was added dropwise to 700 ml of water to precipitate polyrotaxane. The precipitated polyrotaxane was collected through centrifugation and was vacuum-dried. Further, this was dissolved in dimethylsulfoxide, and precipitated in water, and collecting and drying were performed to obtain purified polyrotaxane. 500 mg of the purified polyrotaxane was dissolved in 50 ml of a 1 mol/l NaOH aqueous solution, and 3.83 g of propylene oxide (66 mmol) was added thereto, and stirring was performed at room temperature for 12 h under an argon atmosphere. Next, the polyrotaxane solution was neutralized to a pH of 7 to 8 by using the 1 mol/l HCl aqueous solution, and was dialyzed by a dialysis tube and was freeze-dried to obtain hydroxypropylated polyrotaxane. The obtained hydroxypropylated polyrotaxane was identified by ¹H-NMR and GPC, and was confirmed to be hydroxypropylated polyrotaxane having a desired structure. A mixed solution was prepared by dissolving 5 g of the obtained hydroxypropylated polyrotaxane in 15 g of ε-caprolactone at 80°C. After this mixed solution was stirred at 110°C for 1 h during blowing of dry nitrogen, 0.16 g of a 50 wt% xylene solution of 2-ethylhexanoic acid tin (II) was added thereto, and stirring was performed at 130°C for 6 h. Then, xylene was added thereto so as to obtain a polycaprolactone-modified polyrotaxanexylene solution into which a side chain having a non-volatile concentration of about 35 mass% was introduced. The obtained polycaprolactone-modified polyrotaxanexylene solution was added dropwise to hexane, and through collection and drying, a side chain-modified polyrotaxane (RX-1) having an OH group as a side chain terminal was obtained.

Physical properties of this polyrotaxane (A); RX-1 are as follows.
Weight average molecular weight Mw (GPC): 165,000
Hydroxy group value: 87 mgKOH/g
Modification degree of side chain: 0.5 (50% when displayed by %)
Molecular weight of side chain: average about 350

### <Production method of terminal isocyanate urethane prepolymer (Pre-2) to be used>

A terminal isocyanate urethane prepolymer (Pre-2) used in the urethane resin for the polishing pad was produced by the following method.

In a flask equipped with a nitrogen introduction pipe, a thermometer, and a stirrer, under a nitrogen atmosphere, 50 g of 2,4-tolylenediisocyanate, 90 g of polyoxytetramethyleneglycol (number average molecular weight; 1000), and 12 g of diethyleneglycol were reacted at 80°C for 6 h to obtain a terminal isocyanateurethane prepolymer (Pre-2) having an iso(thio)cyanate equivalent of 905.

### <Example 7>

24 parts by mass of RX-1 and 5 parts by mass of 4,4'-methylenebis(o-chloroaniline) were mixed at 120°C and then a uniform solution was obtained and was sufficiently degassed and was cooled to 100°C to obtain a solution 1. Separately, 3 parts by mass of microballoon 1 was added to 71 parts by mass of Pre-2 heated to 70°C, and stirring by a planetary stirrer was performed to obtain a uniform solution. Thus, a solution 2 was obtained. To the above obtained solution 2, the solution 1 was added, and through stirring, a uniform curable composition was obtained. The curable composition was poured into a mold, and cured at 100°C for 15 h to obtain the urethane resin.

Then, the obtained urethane resin was sliced to obtain the polishing pad made of the urethane resin which has a size of 380 mmϕ, and a thickness of 1 mm.

The polishing pad obtained above was evaluated by the above-described polishing pad evaluation method, and as a result, the polishing rate was 4.9 µm/hr, and the scratch resistance was 1.

### <Examples 8 to 13, Comparative Examples 3 to 5>

Polishing pads made of urethane resins were produced by the same method as in Example 7 except that curable compositions having compositions noted in Table 1 were used, and were evaluated. The results are noted in Table 1.

**Table 1**

| | Curable composition (parts by mass) | | Evaluation result | | | | |
|---|---|---|---|---|---|---|---|
| | Microballoon | Components other than microballoon | Polishing rate | Scratch resistance | Density | Hardness | Hysteresis loss |
| Example 7 | Microballoon 1(3) | Pre-2(71)/RX-1(24)/MOCA(5) | 4.3 | 1 | 0.98 | 28 | 15 |
| Example 8 | Microballoon 4(3) | Pre-2(71)/RX-1(24)/MOCA(5) | 4.5 | 1 | 0.89 | 27 | 15 |
| Example 9 | Microballoon 5(3) | Pre-2(71)/RX-1(24)/MOCA(5) | 4.9 | 1 | 0.88 | 27 | 15 |
| Example 10 | Microballoon 6(3) | Pre-2(71)/RX-1(24)/MOCA(5) | 4.1 | 1 | 0.89 | 28 | 15 |
| Example 11 | Microballoon 7(3) | Pre-2(71)/RX-1(24)/MOCA(5) | 4.5 | 1 | 0.89 | 27 | 15 |
| Example 12 | Microballoon 8(3) | Pre-2(71)/RX-1(24)/MOCA(5) | 4.4 | 1 | 0.94 | 27 | 15 |
| Example 13 | Microballoon 5(3) | Pre-2(88)//MOCA(12) | 3 | 1 | 0.88 | 53 | 65 |
| Comparative Example 3 | Microballoon 2(3) | Pre-2(71)/RX-1(24)/MOCA(5) | 2.6 | 2 | 0.98 | 28 | 15 |
| Comparative Example 4 | Microballoon 3(3) | Pre-2(71)/RX-1(24)/MOCA(5) | 2.5 | 2 | 0.98 | 27 | 15 |
| Comparative Example 5 | Microballoon 2(3) | Pre-2(88)//MOCA(12) | 2 | 3 | 0.98 | 55 | 65 |

As described above in Examples 7 to 13, and Comparative Examples 3 to 5, as compared to the polishing pad using a microballoon whose inner surface does not contain ionic groups, the polishing pad using a microballoon whose inner surface contains ionic groups may have excellent characteristics in that scratch resistance is good in spite of a high polishing rate.

## Claims

1. A microballoon comprising polyurethane (urea) and having ionic groups on an inner surface of the microballoon.

2. The microballoon according to claim 1, wherein an average particle size is 1 µm to 500 µm.

3. The microballoon according to claim 1 or 2, wherein an amount of the ionic groups contained in the microballoon is 0.05 mmol/g to 5 mmol/g.

4. A CMP polishing pad comprising the microballoon according to any one of claims 1 to 3.

5. The CMP polishing pad according to claim 4, wherein a hysteresis loss in a tensile test is 50% or less.

6. A method of producing a microballoon, the method comprising:
(1) mixing and stirring (a) a surfactant-containing organic solvent solution with (b) an aqueous solution containing an ionic-group-containing compound (X) that contains an active hydrogen group capable of reacting with an isocyanate group and at least one ionic group to prepare a water-in-oil (W/O) emulsion that includes the organic solvent solution as a continuous phase, and the aqueous solution as a disperse phase, and
(2) adding (c) a polyfunctional isocyanate compound having at least two isocyanate groups to the water-in-oil (W/O) emulsion to react the polyfunctional isocyanate compound and the ionic-group-containing compound (X) on an interface of the water-in-oil (W/O) emulsion, thereby forming the microballoon made of polyurethane (urea).

7. The method according to claim 6, wherein (b) the aqueous solution containing the ionic-group-containing compound (X) that contains an active hydrogen group capable of reacting with an isocyanate group and at least one ionic group further contains (d) an active hydrogen group-containing compound which contains no ionic group and is selected from polyol, polyamine, or a compound having both a hydroxy group and an amino group.
